# EUROPEAN PATENT APPLICATION

(11) **EP 1 408 392 A2**
(43) Date of publication of application: **14.04.2004**
(21) Application number: 03022802.7
(22) Date of filing: 07.10.2003
(51) Int. Cl.: G06F 1/00

(54) **Digital content distribution system, apparatus, method, and its computer program or computer-readable storage medium containing such program**

(30) Priority: 08.10.2002 JP 2002294492
(71) Applicant: MATSUSHITA ELECTRIC INDUSTRIAL CO., LTD., Kadoma-shi, Osaka 571-8501 (JP)
(72) Inventor: Iino, Daisuke, Chiba 273-0005 (JP); Fujita, Kenichi, Yokohama-shi, Kanagawa 223-0052 (JP); Machida, Kazuhiro, Chiba 270-1356 (JP); Saito, Asako, Tokyo 177-0041 (JP)
(74) Representative: Grünecker, Kinkeldey, Stockmair & Schwanhäusser Anwaltssozietät

(57) **Abstract**

The present invention is intended to electronically sell digital contents to moving users any time . Each user' receiving terminal includes a unit of monitoring conditions of communication with a digital content distribution apparatus run by a content provider and, according to the communication conditions, the receiving terminal sends its equipment identifier data to the digital content distribution apparatus to designate the receiving terminal. The digital content distribution apparatus includes a unit of download and stock management which manages content download and stock data descriptive of content volumes downloaded and stocked in the receiving terminals, associated with the equipment identifier, and a unit of determining a digital content to download which determines a digital content to download to the receiving terminals, based on the content download and stock data, and downloads the digital content to the receiving terminals. These essential components can arrange that providers download contents to be sold to users to the receiving terminals and have them stocked in the terminals when online with the terminals so that the users can purchase the contents any time.

## Description

### BACKGROUND OF THE INVENTION

### Field of the Invention

The present invention relates to a digital content distribution system and its constituent apparatus and equipment which make it possible to provide end users with digital contents that they want anytime.

### Description of the Prior Art

For past several years, services of providing a variety of digital contents using the Internet have been put into practical use.

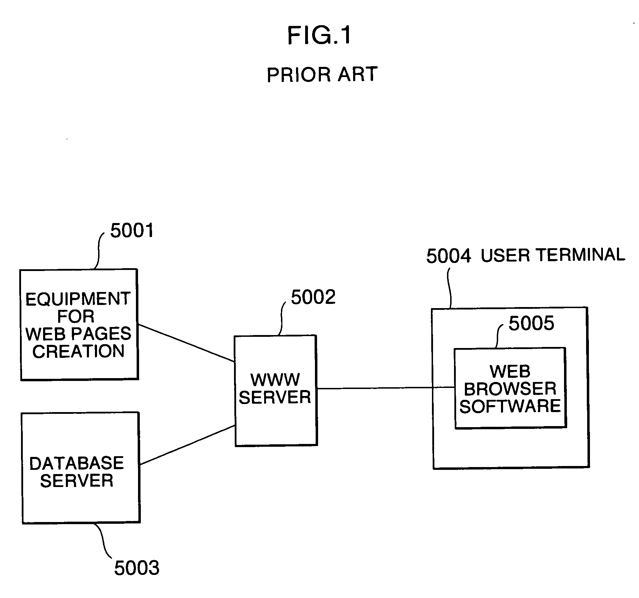

A digital content distribution system of prior art will be described, using FIG. 1. Equipment for web pages creation 5001 creates online shopping web pages which constitute a web site for selling digital contents such as electronic books (e-books) and music contents. A www server 5002 receives the online shopping web pages from the equipment for web pages creation 5001 and makes the web pages open on the Internet, thus playing the role of a digital content store. Meanwhile, a database server 5003 stores and manages digital contents to sell. A user terminal 5004 includes web browser software 5005 which allows the user to access the www server 5002 and get web pages, according to request entered through a user input means which is not shown, and outputs received online shopping web pages to a display means which is not shown.

Using an example case of selling e-books, how the digital content distribution system configured as described above operates will be described below. First, the equipment for web pages creation 5001 creates online shopping web pages for selling e-books and transfers the created online shopping web pages to the www server 5002. These online shopping web pages, described in HTML and similar language, contain a list of e-books' names, authors, summaries, and prices with the identifiers for identifying the digital contents of the e-books to sell.

On the other hand, at the user terminal 5004, the user views the online shopping web pages, using the web browser software 5005. When the user selects an e-book that the user wants to buy from the online shopping web pages, the web browser software 5005 gets a web page for a purchase procedure from the www server 5002 and displays this page. After the user enters necessary information such as user name and credit card number to the purchase procedure web page, when the purchase procedure is complete, the www server 5002 retrieves the digital content having the e-book identifier selected by the user from the database server 3203 and transmits the retrieved digital content to the web browser software 5005. Through this way, the user can buy and download the desired e-book and enjoy it.

Information devices capable of wireless communication such as wireless LANs, Bluetooth, IMT-2000 have lately appeared on the scene and Internet connection service by wireless communication has been popularized. For example, a hot spot service is provided in station buildings and restaurants where users connect to the Internet, using information devices provided with a wireless LAN function and can enjoy digital content distribution services in the manner described above. Recent products of mobile phones are provided with connectivity to the Internet as a standard service.

In the above digital content distribution system of prior art, however, communications environment where connection to a network such as the Internet is enabled is necessary when users are going to buy digital contents such as e-books and music. For example, even if a user has an information device capable of wireless communication, if there is no base station near the present position of the user, the user cannot use the above digital content distribution system. Internet connection service by wireless communication has come into popular use as noted above, whereas a digital content distribution system in which users can buy and take advantage of digital contents that they want anywhere and anytime when they like to get it is not implemented. In addition, services that are currently provided via the Internet are best effort type services. No matter how rapid connection to the network is, time to be taken after the completion of the purchase procedure until digital contents are downloaded and can be used depends on network load conditions and there is no guarantee that the digital contents will be received immediately.

For implementing services that can be used anywhere and anytime when users want to get, there are many problems to solve as discussed above.

By the way, as users will come to have many information devices, it is expected that usage of a plurality of information devices communicating with each other is popularized. In one example of such usage where a mobile device with a wireless LAN communication means and a personal computer with an ADSL communication means are interconnected with a connection means such as USB, when connecting to the Internet, it is conceivable to choose either the wireless LAN communication means of the mobile device or the ADSL communication means of the personal computer which enables connection to the Internet on more advantageous conditions. The reason why such usage would take place is that, if a plurality of communication means can be used to connect to the Internet, the user naturally prefers to connection to the Internet by one of these communication means which provides data communication at a higher rate. However, in prior art, the user must set a communication means to be used for connection to the Internet beforehand, and information devices that are interconnected and allow for automatic determination of an optimum communication means through data exchange between or among them do not exist.

### SUMMARY OF THE INVENTION

The present invention has been devised, addressing the above problems associated with prior art systems, and it is a first obj ect of the present invention to provide a digital content distribution system which can provide end users with digital content that they desire anytime and anywhere, independent of communication conditions between the user side and provider side.

It is a second object of the present invention to provide a digital content distribution system which makes it possible to automatically select a communication means which enables an end user to communicate with the content provider on more advantageous conditions if there are apluralityof communication means that can be used for data transmission and reception between the user side and the content provider side.

In order to achieve the foregoing obj ects, in a first aspect, the invention provides a digital content distribution system for implementing digital content transmission and reception on communication channels. The above digital content distribution system comprises a digital content distribution apparatus and receiving terminals, wherein the digital content distribution apparatus comprises a unit of download and stock management which manages content download and stock management data descriptive of digital content volumes downloaded and stocked in the receiving terminals which receive digital content from the digital content distribution apparatus and a unit of determining a digital content to download which determines a digital content to download to the receiving terminals, using the above content download and stock management data, and downloads the digital content to the receiving terminals. Each of the receiving terminals comprises a unit of equipment identifier data management which manages equipment identifier data for identifying each receiving terminal and a unit of service provision which transmits/receives data to/from the digital content distribution apparatus and provides service to an end user. The digital content distribution apparatus, upon receiving the equipment identifier data from one of the receiving terminals, identifies the content download and stock management data for the receiving terminal having the equipment identifier, using the equipment identifier data received, and thereby can provide service to the end user at the receiving terminal.

Accordingly, a user's receiving terminal transmits equipment identifier data that identifies the receiving terminal to the digital content distribution apparatus of the content provider side. The digital content distribution apparatus can determine digital content to download to the receiving terminal, according to how much and what kinds of digital content downloaded and stocked in the receiving terminal identified by the equipment identifier and download the thus determined digital content to the receiving terminal. Therefore, the provider side can download, for example, e-books intended for sales to the users of the receiving terminals and a sales promotion catalog of e-books to the users' information terminals and have them stocked in the terminals and can provide a service allowing the users to look for an e-book that they want to read from the catalog stocked in the receiving terminals and purchase such a desired e-book, if found, any time they want to purchase some e-book even during an offline with the distribution apparatus.

In a second aspect, the digital content distribution system further includes an information terminal which is connectable to the receiving terminals and has a channel for transmitting/receiving data to/from the digital content distribution apparatus, wherein the unit of service provision of the receiving terminal detects communication channel conditions whereby digital content transmission and reception can be performed through either the receiving terminal' s channel or the information terminal' s channel, which performs at a higher rate, to the digital content distribution apparatus.

Accordingly, if, for example, as compared with direct data transmission/reception through the channel between the information terminal provided with a wireless LAN communication function and the digital content distribution apparatus, higher-rate data communication can be performed by indirect data transmission via a receiving terminal provided with a wired LAN communication function which is connected to the information terminal to the digital content distribution apparatus, the information terminal can transmit/receive data to/from the distribution apparatus via the receiving terminal.

In a third aspect, the abovementioned content download and stock data includes, at least, space available in a storage medium included in each receiving terminal and a list of digital contents stored on the storage medium. The unit of determining digital content to download of the digital content distribution apparatus generates a removal instruction command to remove digital contents from the storage medium included in each receiving terminal, based on the content download and stock data, and sends the thus generated removal instruction command to each receiving terminal. The unit of service provision of the receiving terminal receives a removal instruction command to remove digital contents out of the digital contents retained on the information terminal and removes the digital contents, according to the removal instruction command.

Accordingly, when the digital content distribution apparatus of the content provider side attempts to download new digital contents to the information terminal and have the contents stocked additionally in the terminal, but the space available in the storage medium of the user' s receiving terminal is less than the required, by removing part of the digital contents stocked so far, sufficient space is provided and the new contents can be stocked additionally. Thus, the provider side can exercise control of content download so that as latest titles of digital contents as possible will be stocked in the user's receiving terminals and can perform effective sales and promotion activity.

In a fourth aspect, each receiving terminal includes a display unit which accepts a purchase order for a digital content from the user by providing a user-interface screen that allows the user to specify content designation information that designates a digital content and displays the thus designated digital content and a unit of booking content to receive which registers the content designation information if the receiving terminal does not retain the digital content designated by the content designation information. The unit of service provision of the receiving terminal transmits the content designation information to the digital content distribution apparatus, according to communication conditions monitored by the unit of monitoring communication conditions, and thereby the digital content designated by the content designation information can be booked and received.

Accordingly, when the user attempts to purchase content by specifying content designation information that designates a content, if the content is not stocked in the receiving terminal, the content is booked so that it will be received from the digital content distribution apparatus, using the content designation information. Even if the present position of the user inhibits the user's receiving terminal from communicating with the digital content distribution apparatus, when the terminal becomes online with the digital content distribution apparatus as the user move, the booked content can be received automatically from the digital content distribution apparatus.

In a fifth aspect, each receiving terminal further comprises a unit of generating usage history information which, in response to user action of purchase order for at least one content, generates usage history information that the user has now purchased the at least one content, and a unit of transmitting usage history information which transmits the usage history information with the equipment identifier data to the digital content distribution apparatus. The digital content distribution apparatus in the digital content distribution system further comprises a unit of user information management which manages user information about the users of the receiving terminals associated with the equipment identifiers, a unit of receiving usage history information which receives the usage history information and the equipment identifier data from the receiving terminals; and a billing unit which identifies user information, based on the equipment identifier data received, and bills the user identified by the thus identified user information, according to the usage history information.

Accordingly, a user' s receiving terminal generates usage history information about at least one content for which the user placed a purchase order and transmits this information with the equipment identifier to the digital content distribution apparatus when online with the digital content distribution apparatus. The digital content distribution apparatus identifies the user associated with the equipment identifier received from the receiving terminal and can bill the user, according to the usage history. The provider side can sell the digital content stocked in the receiving terminals to even a user who is placed in circumstances where it is impossible to communicate with the provider's digital content distribution apparatus, receives usage history information from the user's receiving terminal when the terminal becomes online with the digital content distribution apparatus as the user moves, and can bill the user, using the usage history received.

In a sixth aspect, each receiving terminal further comprises a unit of service enable/disable decision which checks to see that the usage history information has been transmitted to the digital content distribution apparatus within a predetermined period after the user purchased at least one content and, if transmission of the usage history information has not occurred within the predetermined period, stops the service of digital content distribution at least until transmission of the usage history information occurs. Moreover, the unit of service enable/disable decision has a function of making a display of a message that prompts the user to transmit the usage history information.

Accordingly, if usage history information for at least one content purchased by the user has not been transmitted from the user' s receiving terminal to the digital content distribution apparatus within a predetermined period, the user' s receiving terminal can be set unserviceable forcibly until transmission of the usage history information occurs. Consequently, a possible problem that a user continues to enjoy content without paying the charge for the content to the provider can be avoided. By displaying the message prompting the user to transmit the usage history, the provider can exercise their legitimate right of collecting the charge for the content that they supplied from the user.

In a seventh aspect, the unit of determining a digital content to download of the digital content distribution apparatus, upon receiving the equipment identifier data and the usage history information from one of the receiving terminals, determines a digital content to download to the receiving terminal identified by the equipment identifier data, based on the equipment identifier data and the usage history information.

Accordingly, if it is impossible to stock all contents that can be provided by the provider in a user's information terminal because of capacity limitations of the storage medium included in the user' s receiving terminal, content download can be controlled to have contents to which the user may take a liking with high possibility stocked preferentially in the user's receiving terminal, based on the usage history information about contents that the user purchased in the past. Thus, even if the capacity of the storage medium included in the user's receiving terminal is small, the provider can perform sales and promotion activity effectively.

In an eighth aspect, the unit of service provision of the information terminal transmits data format information about data formats in which the receiving terminal can process content data to the digital content distribution apparatus and the unit of determining digital content to download of the digital content distribution apparatus downloads a digital content in a format compliant to the data format information received from each receiving terminal to the receiving terminal.

Accordingly, the digital content distribution apparatus of the content provider side can download a digital content in a format in which the user's receiving terminal can process content data to the receiving terminal and have the digital content stocked in the receiving terminal, so that the content purchased by the user can be displayed assuredly on the user' s own receiving terminal.

In a ninth aspect, the invention provides a digital content distribution system for implementing digital content transmission and reception on communication channels, which includes a digital content distribution apparatus and an information terminal. The information terminal includes a unit of service provision which, when a portable storage medium is mounted on the information terminal, transmits medium identifier data for identifying the storage medium to the digital content distribution apparatus, receives digital content downloaded from the digital content distribution apparatus, and stores the digital content onto the storage medium. The digital content distribution apparatus comprise a unit of download and stock management which manages content download and stock management data descriptive of digital content volumes downloaded and stocked in the storage mediumper enduser and a unit of determining digital content to download which determines a digital content to download to the information terminal on which the storage medium has been mounted, using the content download and stock management data, and downloads the digital content to the information terminal. The digital content distribution apparatus, upon receiving the medium identifier data from the information terminal, identifies the content download and stock management data for the medium, using the medium identifier data received, and thereby can provide service to the end user at the information terminal.

Accordingly, when the storage medium is mounted on the information terminal that can communicate with the digital content distribution apparatus, the information terminal automatically transmits the medium identifier data that identifies the storage medium to the digital content distribution apparatus. The digital content distribution apparatus can determine digital content to be preferably stored onto the storage medium, according to how much and what kinds of digital content downloaded and stocked in the storage medium identified by the medium identifier and download the thus determined digital content to the information terminal. Therefore, the provider can exercise download control, for example, when a user' s storage medium is mounted on the information terminal, the provider downloads e-books intended for sales to the user and a sales promotion catalog of e-books to the information terminal and have them stored onto the storage medium of each user. In this way the provider can provide the user of the storage medium with a service allowing the user to look for an e-book that he or she wants to read from the catalog stocked in the storage medium and purchase such a desired e-book, if found.

In a tenth aspect, the abovementioned content download and stock data includes, at least, space available in the storage mediumand a list of digital contents stored on the storagemedium. The unit of determining digital content to download of the digital content distribution apparatus generates a removal instruction command to remove digital contents from the storage medium, based on the content download and stock data, and transmits the thus generated removal instruction command to the information terminal on which the storage medium has been mounted. The unit of service provision of the information terminal receives a removal instruction command to remove digital contents out of the digital contents retained on the storage medium and removes the digital contents from the storage medium, according to the removal instruction command.

Accordingly, when the digital content distribution apparatus of the content provider side attempts to download new digital contents and have the contents stocked additionally in the storage medium, by removing part of the digital contents stocked so far, according to space available in the storage medium, sufficient space is provided and the new contents can be stocked additionally. Thus, the provider can exercise control of content download so that as latest titles of digital contents as possible will be stocked in the storage medium owned by each user and can perform effective sales and promotion activity.

In an eleventh aspect, for receiving terminals on which the storage medium which is different per user should be mounted and digital content stored on the storage medium can be rendered, each receiving terminal comprises a display unit which accepts a purchase order for a digital content from the user by providing a user-interface screen that allows the user to specify content designation information that designates the digital content, reads the thus designated digital content from the storage medium, and displays the content, and a unit of booking content to receive which, if the storage medium does not retain the digital content designated by the content designation information, stores the content designation information onto the storage medium. The information terminal further comprises a unit of detecting content designation information which, when the storage medium is mounted, detects the content designation information stored on the storage medium and reads the content designation information. The unit of service provision of the information terminal transmits the content designation information to the digital content distribution apparatusand,thereby,the digital content designated by the content designation information can be booked and received.

Accordingly, when the user attempts to purchase a content by specifying content designation information that designates the content, if the content is not stocked in the receiving terminal, the content designation information is stored onto the storage medium to ensure that the content is booked so that it will be received from the digital content distribution apparatus, using the content designation information. When the storage medium is mounted on the information terminal, the information terminal detects the content designation information stored on the storage medium and can obtain the content designated by this information. Therefore, for example, even if the present position of the user inhibits the user's receiving terminal with a wireless LAN function from communicating with the digital content distribution apparatus, by mounting the storage medium on the information terminal with a wired LAN function which is assumed installed, for example, on a street corner, desired content booked to receive can easily be obtained from the digital content distribution apparatus.

In a twelfth aspect, for receiving terminals on which the storage medium which is different per user should be mounted and digital content stored on the storage medium can be rendered, each receiving terminal comprises a unit of generating usage history information which, in response to user action of purchase order for at least one content, generates usage history information that the user has now purchased the at least one content and stores the generated usage history information onto the storage medium. The information terminal further comprises a unit of detecting usage history information which, when the storage medium is mounted, detects usage history information stored on the storage medium and reads the usage history information and a unit of transmitting usage history information which transmits the usage history information with the medium identifier data to the digital content distribution apparatus. The digital content distribution apparatus further comprises a unit of user information management which manages user information about users associated with the medium identifiers, a unit of receiving usage history information which receives the usage history information and the medium identifier data from the information terminal, and a billing unit which identifies user information, based on the medium identifier data received, and bills the user identified by the thus identified user information, according to the usage history information.

Accordingly, a user' s receiving terminal generates usage history information about at least one content for which the user placed a purchase order and stores this information onto the storage medium. When the storage medium is mounted on the information terminal, the information terminal detects the usage history information stored on the storage medium and transmits this information with the medium identifier to the digital content distribution apparatus. The digital content distribution apparatus identifies the user associated with the medium identifier received from the information terminal and can bill the user, according to the usage history. Thus, independent of whether or not communication is enabled between the digital content distribution apparatus of the provider side and the user' s receiving terminal, the provider side can sell the digital content stocked in each storage medium to its user, when the user mounts the storage medium on the information terminal, receives the usage history information stored on the storage medium via the information terminal, and can bill the user, using the usage history received.

In a thirteenth aspect, each receiving terminal further comprises a unit of service enable/disable decision which checks to see that the usage history information has been transmitted to the digital content distribution apparatus within a predetermined period after the user purchased at least one content and, if transmission of the usage history information has not occurred within the predetermined period, stops the service of digital content distribution at least until transmission of the usage history information occurs. Moreover, the unit of service enable/disable decision makes a display of a message that prompts the user to transmit the usage history information.

Accordingly, if usage history information stored on the storage medium has not been transmitted to the digital content distribution apparatus within a predetermined period, data reading from the storage medium is made impossible forcibly until transmission of the usage history information occurs. Consequently, a possible problem that a user continues to enjoy content without paying the charge for the content to the provider can be avoided. By displaying the message prompting the user to transmit the usage history, the provider can exercise their legitimate right of collecting the charge for the content that they supplied from the user.

In a fourteenth aspect, the unit of determining digital content to download of the digital content distribution apparatus, upon receiving the medium identifier data and the usage history information from the information terminal, determines digital content to download to the information terminal on which the storage medium identified by the medium identifier data has been mounted, based on the medium identifier data and the usage history information.

Accordingly, if it is impossible to stock all contents that can be provided by the provider in a user' s storage medium because of capacity limitations of the storage medium, content download can be controlled to have contents to which the user may take a liking with high possibility stocked preferentially in the user's storage medium, based on the usage history information about contents that the user purchased in the past. Thus, even if the capacity of the storage medium owned by a user is small, the provider can perform sales and promotion activity effectively.

In a fifteenth aspect, each receiving terminal stores data format information about data formats in which the receiving terminal can process content data onto the storage medium. The unit of service provision of the information terminal, when the storage medium is mounted, reads the data format information from the storage medium and transmits the data format information to the digital content distribution apparatus. The unit of determining a digital content to download of the digital content distribution apparatus downloads a digital content in a format compliant to the data format information to the information terminal.

Accordingly, as the information terminal transmits data format information about data formats in which the receiving terminal can process content data to the digital content distribution apparatus of the provider side, the digital content distribution apparatus can download digital content in a format in which the content is displayable on the receiving terminal to the information terminal and have it stored onto the storage medium. Therefore, even if a data format in which content is displayable on the information terminal to which the content is downloaded differs from a data format in which content is displayable on the receiving terminal on which the content should be rendered to the user, it is ensured that the user' s receiving terminal can display the content from the storage medium.

The above objects and advantages of the present invention will be more apparent from the following detailed description of the preferred embodiments thereof, taken in conjunction with the accompanying drawings.

### BRIEF DESCRIPTION OF THE DRAWINGS

FIG. 1 is a schematic configuration diagram of a digital content distribution system of prior art;
FIG. 2 is a schematic configuration diagram of a digital content distribution system according to a first preferred embodiment of the present invention;
FIG. 3 is an illustration of a guide catalog;
FIG. 4 is an illustration of an e-book title labeled on the spine;
FIG. 5 is an illustration of a reading screen;
FIG. 6 is an illustration of relationship between the guide catalog and the digital contents of the e-books available on a receiving terminal;
FIG. 7 is an illustration for explaining digital content management information;
FIG. 8 is an illustration for explaining content download and stock data;
FIG. 9 is an illustration for explaining equipment identifier data which is retained by a unit of equipment identifier data management;
FIG. 10 is an illustration of an automatic download request command;
FIG. 11 is an illustration of a catalog update command;
FIG. 12 is an illustration of a stock instruction command;
FIG. 13 is an illustration of a removal instruction command;
FIG. 14 is a flowchart describing a procedure in which a receiving terminal receives digital content, according to Embodiment 1 of the present invention;
FIG. 15 is a flowchart describing a procedure of operation of a digital content distribution apparatus, according to Embodiment 1 of the present invention;
FIG. 16 is a schematic configuration diagram of a digital content distribution system according to a preferred Embodiment 2 of the present invention;
FIG. 17 is an illustration of relationship between the guide catalog and the digital contents of the e-books;
FIG. 18 is an illustration of a message box displayed when desired e-book content is not stocked in an information terminal;
FIG. 19 is an illustration of a message box displayed upon receiving an e-book content which has been booked by a user request from the distribution apparatus;
FIG. 20 is an illustration for explaining content designation information;
FIG. 21 is an illustration of a designated content download request command;
FIG. 22 is a flowchart describing a procedure in which the receiving terminal books and receives digital content, according to Embodiment 2 of the present invention;
FIG. 23 is a flowchart describing a procedure of operation of the digital content distribution apparatus, according to Embodiment 2 of the present invention;
FIG. 24 is a schematic configuration diagram of a digital content distribution system according to a preferred Embodiment 3 of the present invention;
FIG. 25 is an illustration for explaining a function of downloading content responsive to user preferences;

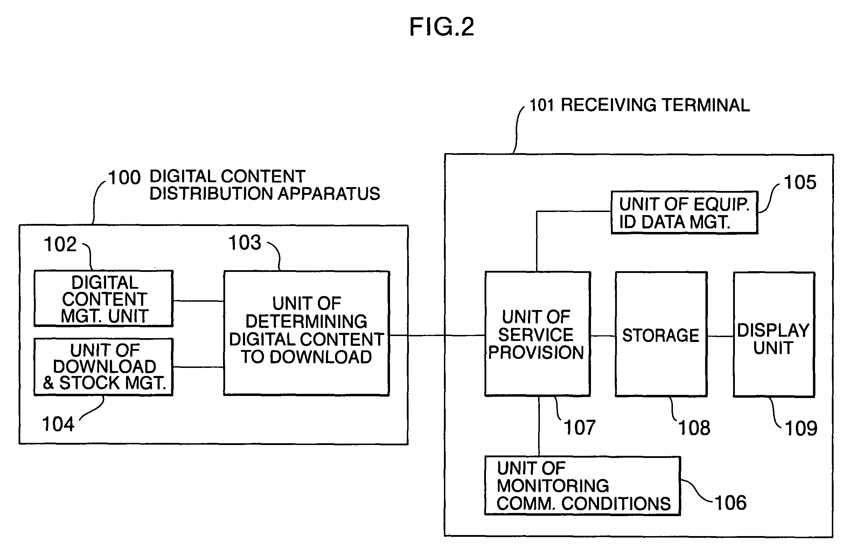

FIG. 2 6 is a diagram for explaining management constitution for digital content and other data on a receiving terminal;

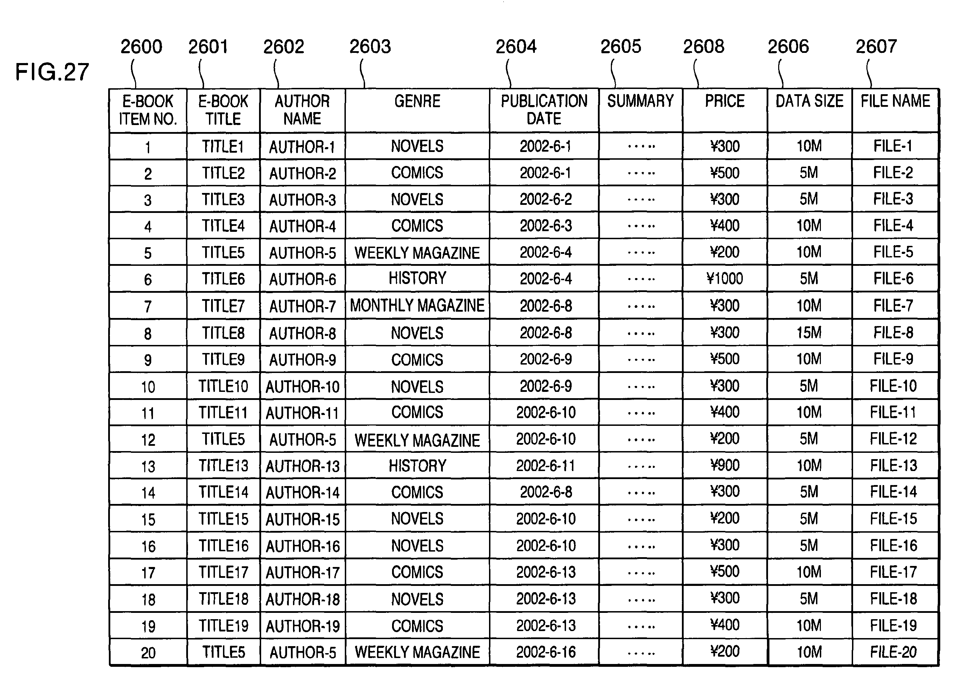

FIG. 27 is an illustration for explaining digital content management information;

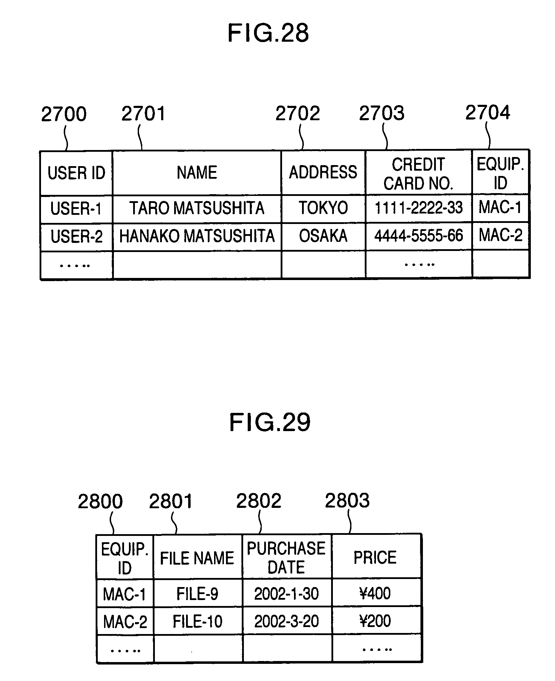

FIG. 28 is an illustration for explaining user information which is managed by the digital content distribution apparatus;
FIG. 29 is an illustration for explaining usage history formation which is managed by the digital content distribution apparatus;

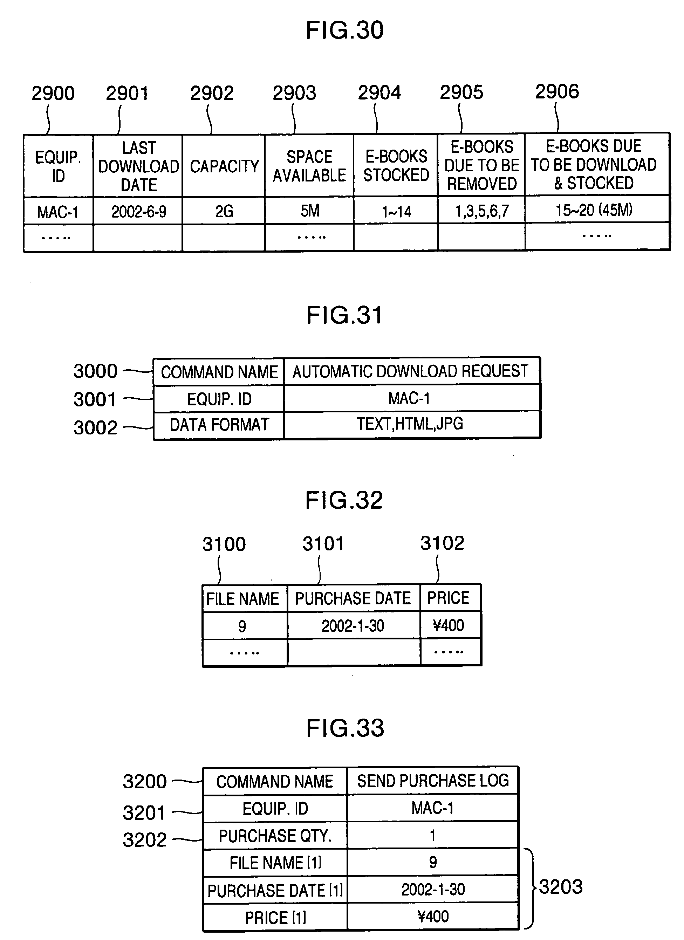

FIG. 30 is an illustration for explaining content download and stock data which is managed by the digital content distribution apparatus;
FIG. 31 is an illustration of an automatic download request command which is transmitted from a receiving terminal to the distribution apparatus;
FIG. 32 is an illustration for explaining usage history information which is managed by a receiving terminal;
FIG. 33 is an illustration of a transmit usage history command which is transmitted from a receiving terminal to the distribution apparatus;

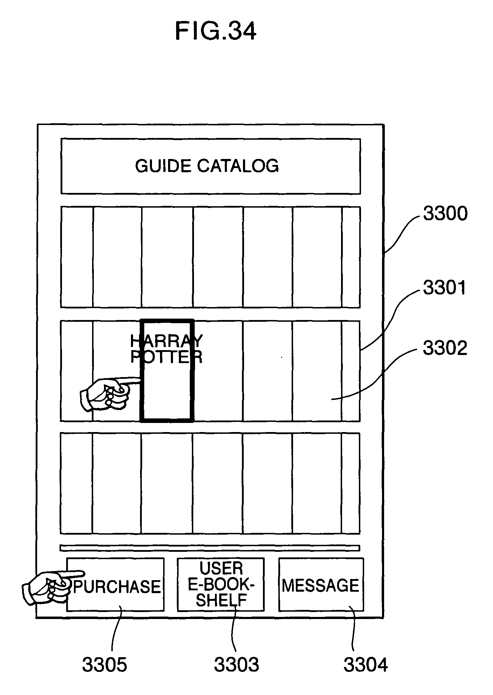

FIG. 34 is an illustration of a guide catalog;

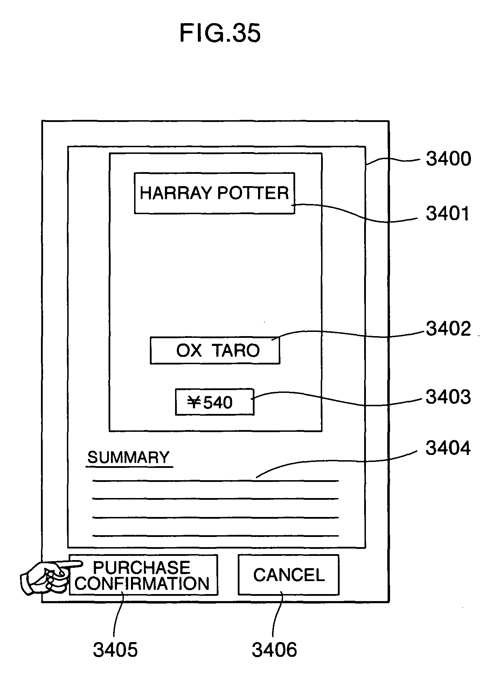

FIG. 35 is an illustration of a purchase confirmation dialog box;

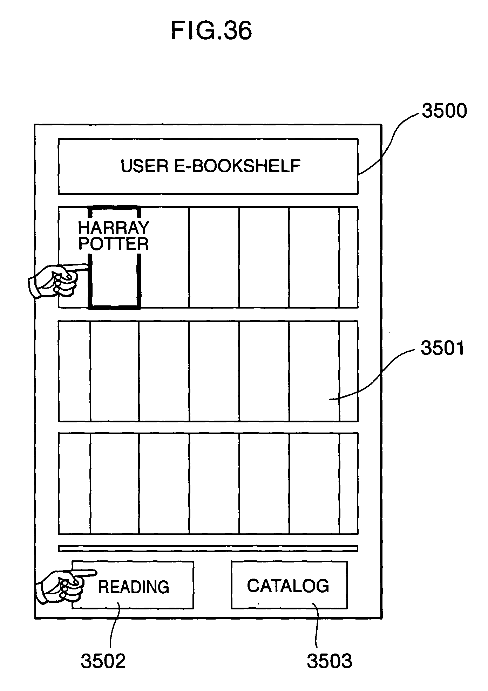

FIG. 36 is an illustration of a user e-bookshelf;

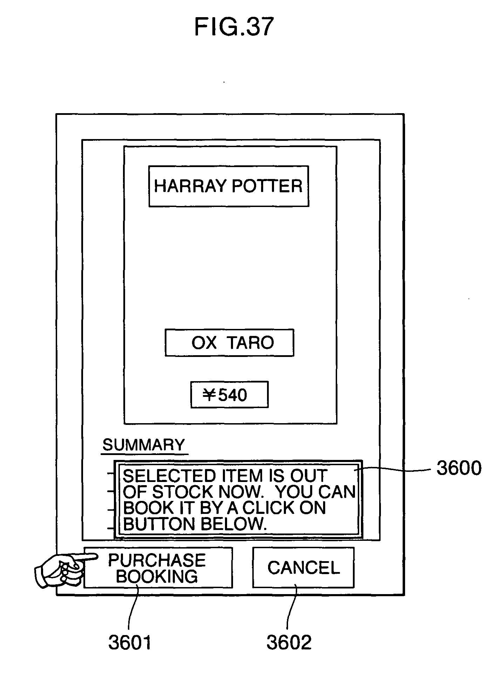

FIG. 37 is an illustration of a message box displayed when an e-book content is not stocked in the receiving terminal;

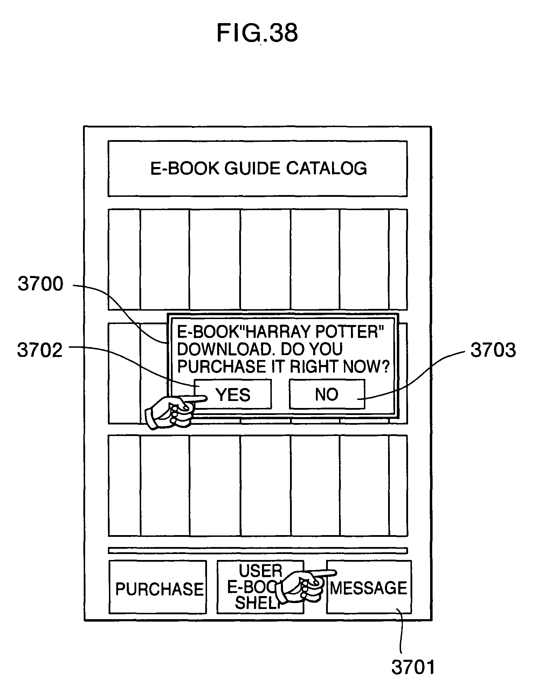

FIG. 38 is an illustration of a message box displayed upon the reception of an e-book content for which purchase booking was made by the user from the digital content distribution apparatus;

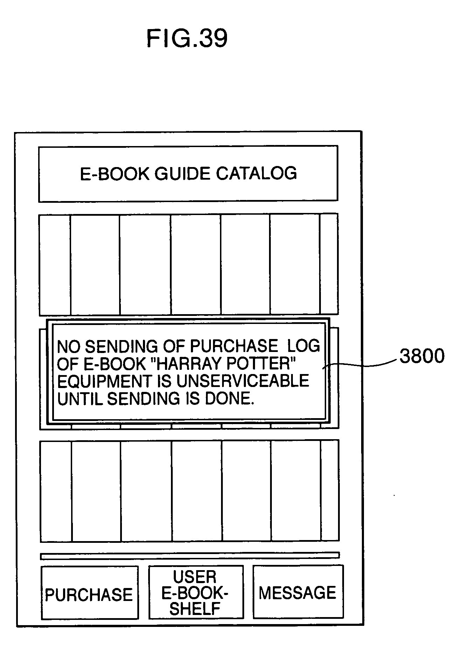

FIG. 39 is an illustration of a service disable message box;

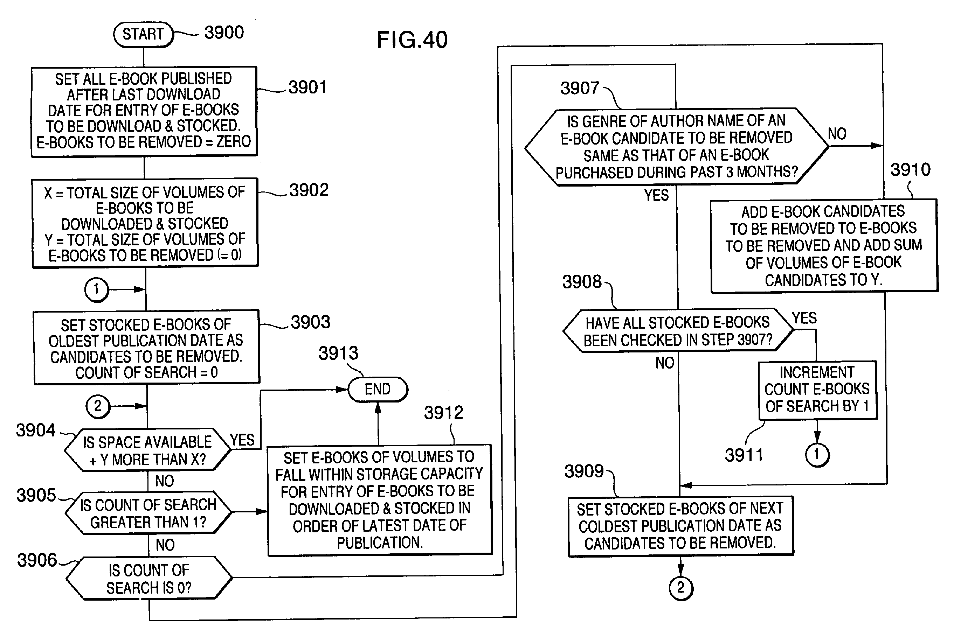

FIG. 40 is a flowchart describing a procedure of operation of the digital content distribution apparatus, according to Embodiment 3 of the present invention;

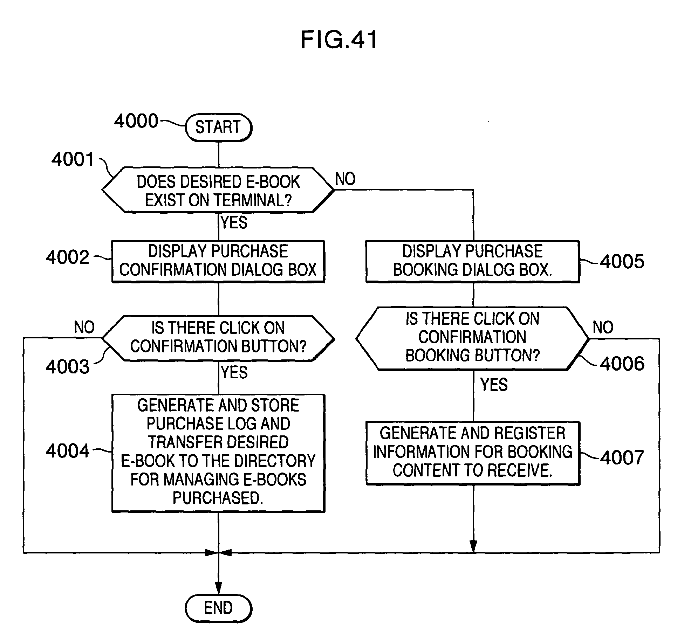

FIG. 41 is a flowchart describing a procedure of purchase and purchase booking, which is performed on a receiving terminal, according to Embodiment 3 of the present invention;

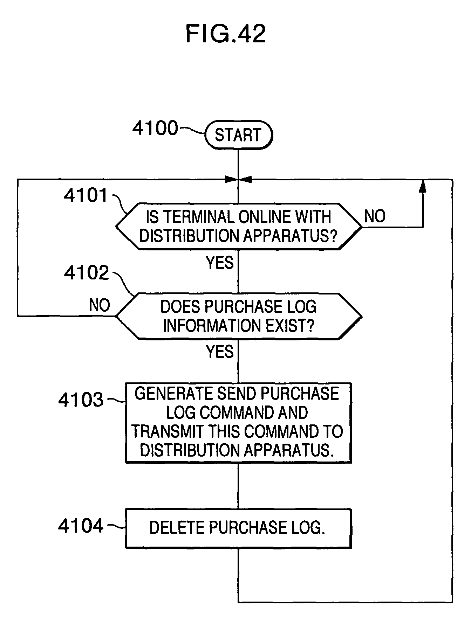

FIG. 42 is a flowchart describing a procedure of transmitting usage history information, which is performed on a receiving terminal, according to Embodiment 3 of the present invention;

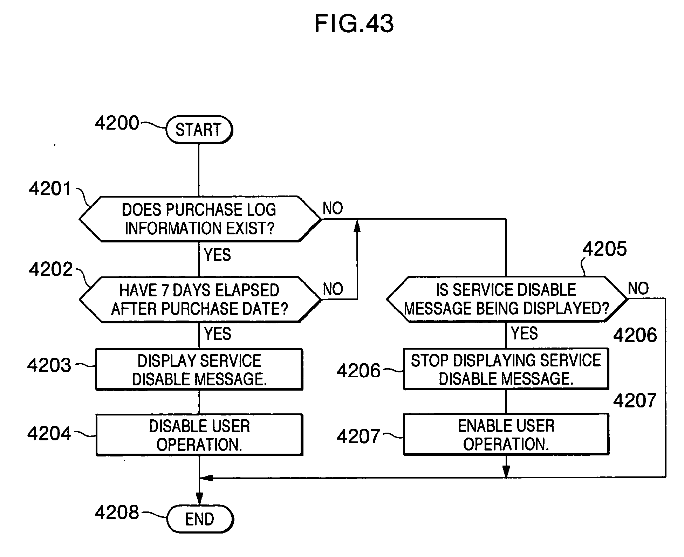

FIG. 43 is a flowchart describing a procedure of making service enable/disable decision, which is performed on a receiving terminal, according to Embodiment 3 of the present invention;

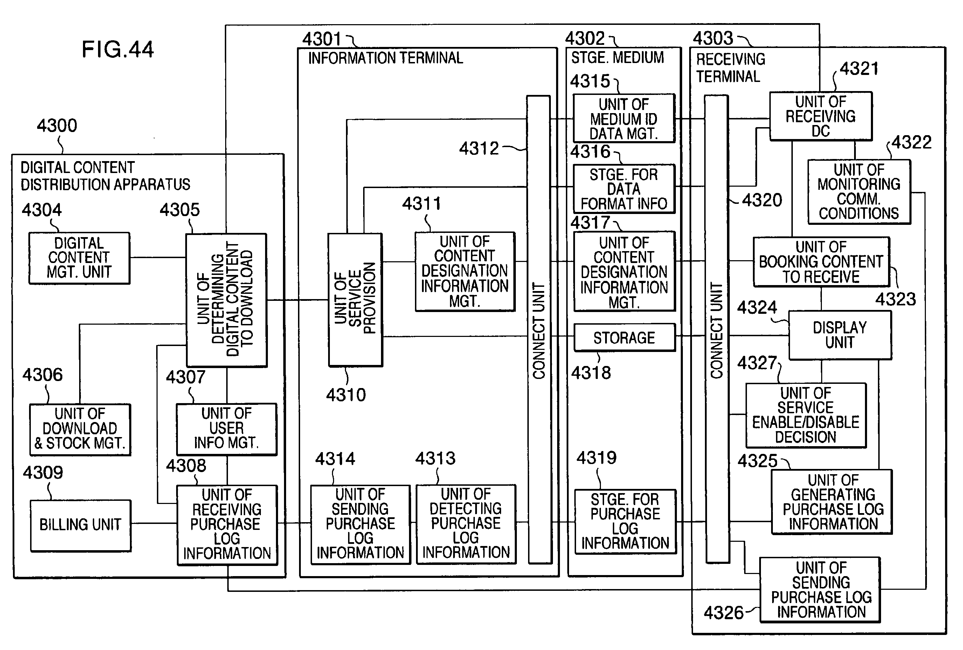

FIG. 44 is a schematic configuration diagram of a digital content distribution system according to a preferred Embodiment 4 of the present invention;

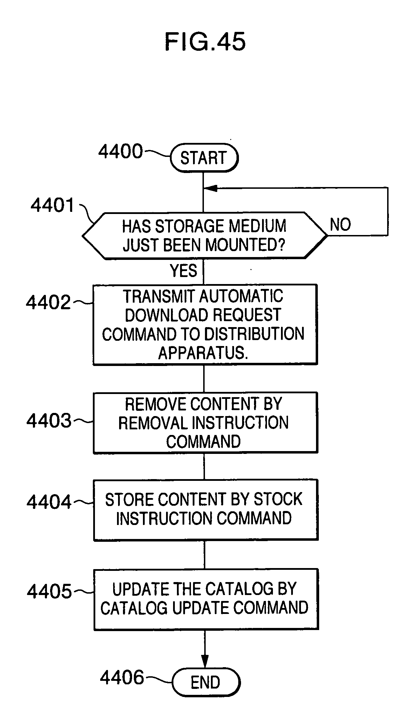

FIG. 45 is a flowchart describing an automatic receiving procedure which is performed on an information terminal, according to Embodiment 4 of the present invention;

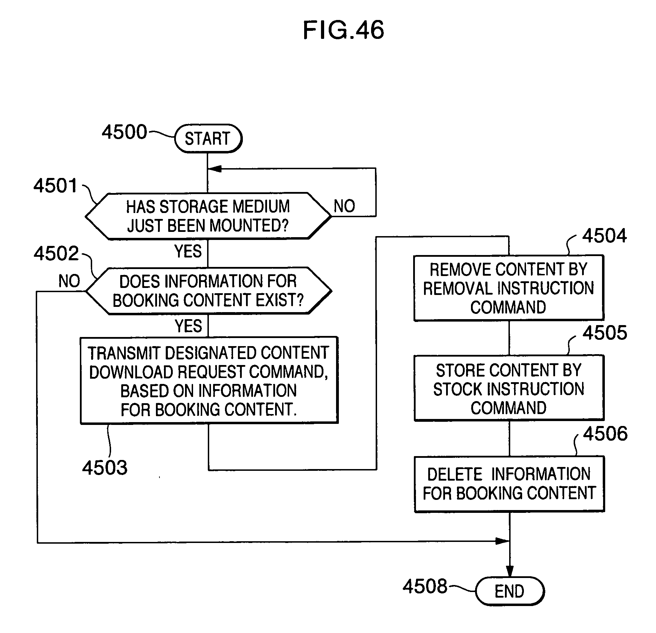

FIG. 46 is a flowchart describing a booking and download procedure which is performed on an information terminal, according to Embodiment 4 of the present invention;

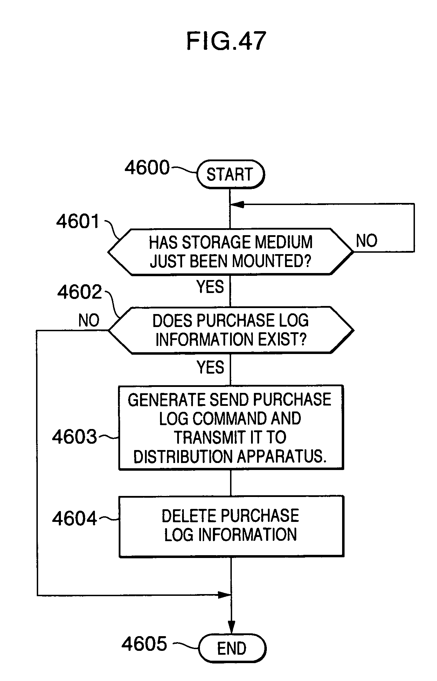

FIG. 47 is a flowchart describing a usage history transmitting procedure which is performed on an information terminal, according to Embodiment 4 of the present invention;

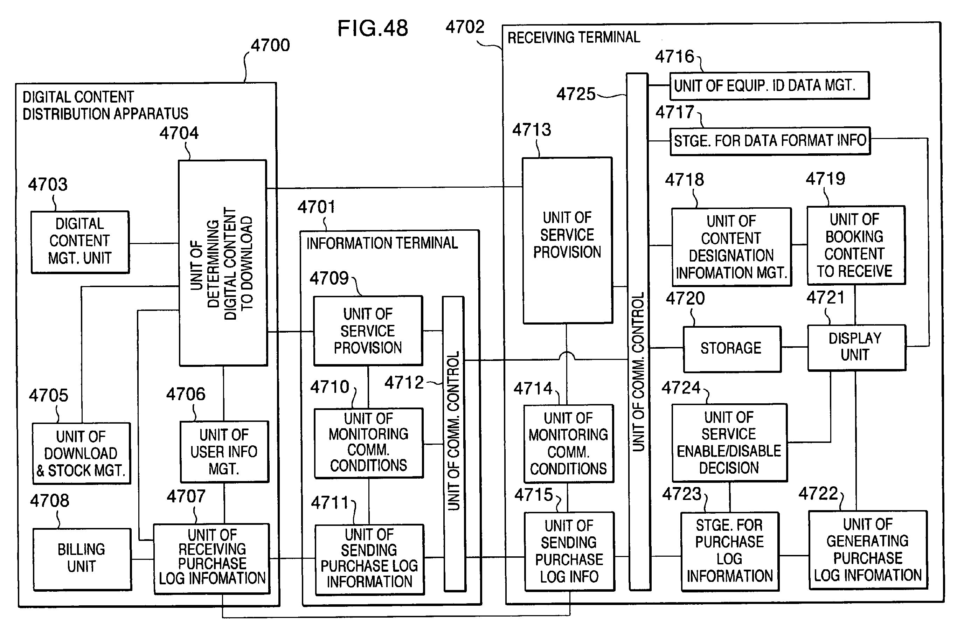

FIG. 48 is a schematic configuration diagram of a digital content distribution system according to a preferred Embodiment 5 of the present invention;

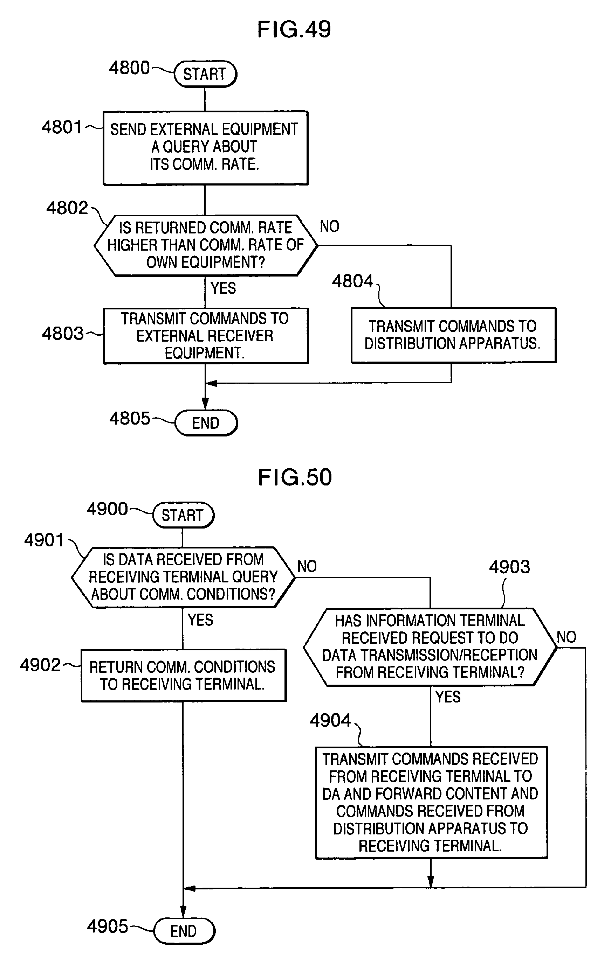

FIG. 49 is a flowchart describing a procedure for selecting communication means, which is performed on a receiving terminal, according to Embodiment 5 of the present invention; and
FIG. 50 is a flowchart describing a procedure of operation of an information terminal, according to Embodiment 5 of the present invention.

### DESCRIPTION OF THE PREFERRED EMBODIMENTS

The present invention now is described fully hereinafter throughpreferredembodiments of the invention andwith reference to the accompanying drawings. It should be understood that the present invention is not limited to these embodiments and may be embodied in other modified forms without departing from its spirit or essential characteristics.

### (First embodiment)

FIG. 2 is a diagram showing an example of configuration of a digital content distribution system according to the present invention. In FIG. 2, reference numeral 100 denotes a digital content distribution apparatus for distributing digital content; 101 denotes a receiving terminal which receives digital content distributed from the digital content distribution apparatus 100, wherein the receiving terminal is one of the receiving terminals connectable to the digital content distribution apparatus; 102 denotes a digital content management unit which manages digital content items; 103 denotes a unit of determining digital content to download which receives equipment identifier data that the digital content distribution apparatus 100 uniquely assigned to a receiving terminal 101, determines digital content to download to the receiving terminal, based on the received equipment identifier data, and downloads the digital content to the receiving terminal; 104 denotes a unit of download and stock management which manages content download and stock data about digital content volumes downloaded and stocked in a storage medium included in the receiving terminals 101; 105 denotes a unit of equipment identifier data management which manages the foregoing equipment identifier data; 106 denotes a unit of monitoring communication conditions which monitors the conditions of communication between the receiving terminal 101 and the digital content distribution apparatus 100; 107 denotes a unit of service provision which sends the equipment identifier data to the digital content distribution apparatus 100 and receives digital content distributed from the digital content distribution apparatus 100 when communication is enabled between the digital content distribution apparatus 100 and the receiving terminal 101; 108 denotes storage which stores digital content and related data received from the digital content distribution apparatus 100; and 109 denotes a display unit which displays digital content retrieved from the storage 108.

A noticeable feature of the digital content distribution system of Embodiment 1 is that, when communication is enabled between the receiving terminal 101 and the digital content distribution apparatus 100, the receiving terminal 101 sends the equipment identifier data uniquely assigned to it to the digital content distribution apparatus 100 and the digital content distribution apparatus 100 identifies the receiving terminal and its content download and stock data descriptive of digital content volumes downloaded and stocked in the receiving terminal, based on the equipment identifier data received from the receiving terminal 101, and determines digital content to download to the receiving terminal, based on the content download and stock data thus identified.

In the following, the operation of the thus configured digital content distribution system will be described in detail, using an example of e-book distribution service. It should be appreciated that the digital content distribution system of the present invention is applicable to, but not limited to e-books, and also applicable to music and other digital content distribution service.

In the digital content distribution system of Embodiment 1, which will be described hereinafter, the digital content distribution apparatus 100 automatically downloads a guide catalog of e-books and the digital contents of the e-books to be referenced from the guide catalog to the receiving terminal when communication with the receiving terminal 101 is enabled. The receiving terminal 101 stocks the received guide catalog and digital contents of the e-books in the storage medium that the receiving terminal 101 includes. When a user selects a desired e-book from the guide catalog stocked in the receiving terminal 101, the user can begin reading the selected e-book.

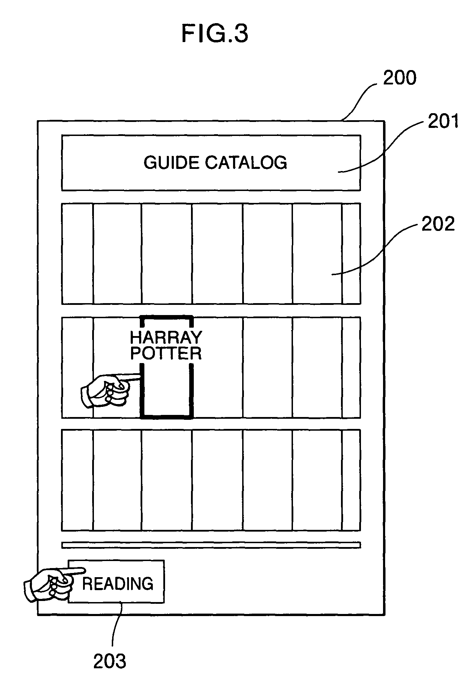

FIG. 3 shows a display screen of the guide catalog of e-books rendered on the display unit 109 of the receiving terminal 101. This screen is initially displayed when the user starts up the receiving terminal 101. When the terminal starts up, the display unit 109 automatically reads the guide catalog from the storage of the receiving terminal 101 and shows the catalog.

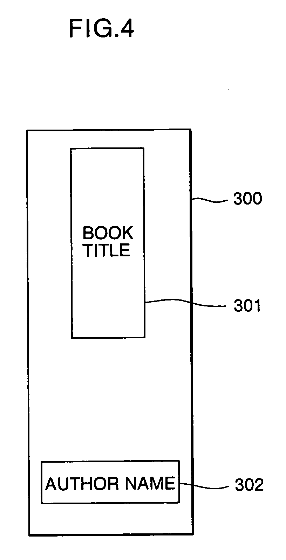

In FIG. 3, reference numeral 200 denotes the display of the receiving terminal 101; 201 denotes a guide catalog display area; and 202 denotes an e-book list rendering area where information about the e-books available on the terminal is shown; that is, e-book titles labeled on the spine appear as will be exemplified in FIG. 4. When the user selects an e-book title that the user wants to read from the e-book list rendered in the list rendering area 202 and clicks on a read button 203, the user can begin reading the selected e-book.

FIG. 4 is an illustration of an example of e-book title labeled on the spine to be shown in the e-book list rendering area 202. The spine has a "e-book title" label 301 and an "author name" label. The spines of the available e-books like the one shown in FIG. 4 are arranged in the list rendering area 202 in FIG. 3, so that the user can select an e-book as if the user looked at a real bookshelf.

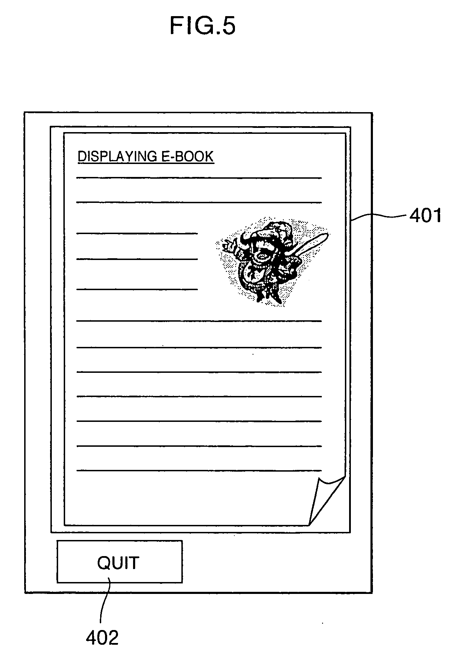

FIG. 5 shows a reading screen which is rendered by clicking on the read button 203 in FIG. 3. The user can enjoy reading of the selected e-book. When the user clicks on a quit button 402, the user can return to the guide catalog display screen of FIG. 3.

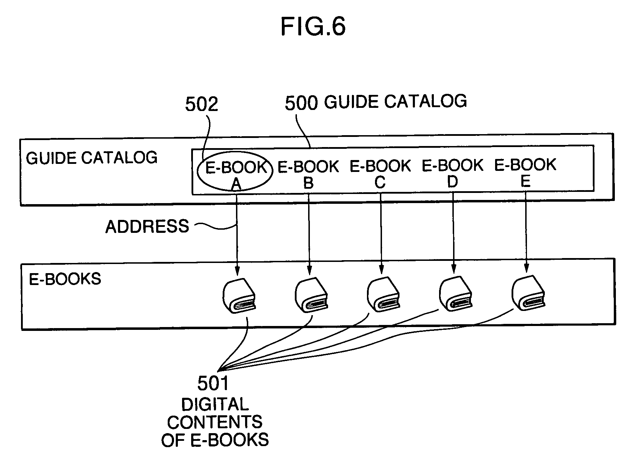

FIG. 6 is a diagram showing relationship between the guide catalog and the digital contents of the available e-books stocked in the storage medium that the receiving terminal 101 includes.

In FIG. 6, reference numeral 500 denotes the guide catalog of e-books stocked in the receiving terminal 101 and 501 denotes the digital contents of the e-books stocked in the receiving terminal 101. In the guide catalog 500, information about the stocked e-books is described; for example, "e-book title," "author name," "genre (e.g., novels, comics, and history)," and "summary" per e-book. Referring to this information, the user can select an e-book that invokes the user' s interest and begin reading of the e-book. Moreover, address information per e-book which is used to retrieve the digital content of an e-book from the storage on the receiving terminal 101 is described in the guide catalog. Using this address information, the digital content of the e-book selected by the user is read and rendered to the user. In the example of FIG. 6, it is depicted that the digital contents of e-books A to E are stocked in the receiving terminal 101 and their addresses are described in the guide catalog 500.

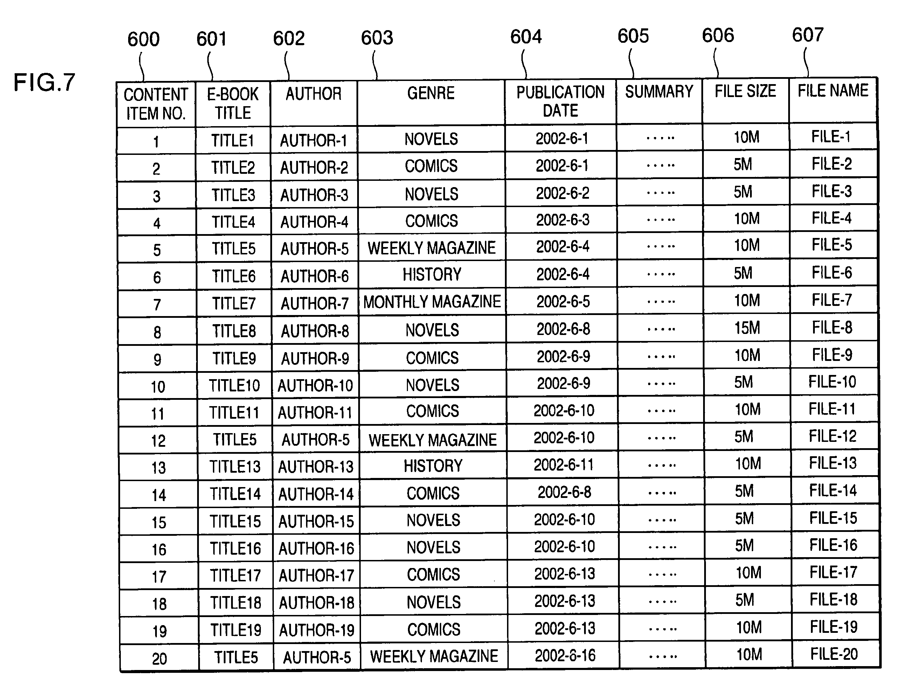

FIG. 7 shows an example of digital content management information for management of the digital contents of e-books. This digital content management information is managed by the digital content management unit 102 of the digital content distribution apparatus 100.

In FIG. 7, reference numeral 600 denotes column, e-book content item number which is assigned to the digital content of an e-book for management; 601 denotes column "e-book title"; 602 denotes column "author name"; 603 denotes column "genre (e.g., novels and comics)"; 604 denotes column "publication date"; 605 denotes column "summary" for the summary description of an e-book; 606 denotes column, data size of the digital content of an e-book; and 607 denotes column, file name of the digital content of an e-book. The guide catalog of the digital contents distributed to a receiving terminal 101 is created, based on the digital content management information exemplified in FIG. 7. The addresses for retrieving the digital contents of e-books available on the terminal, which is described in the guide catalog, correspond to the file names 607 of the digital contents of the e-books stocked in the receiving terminal 101.

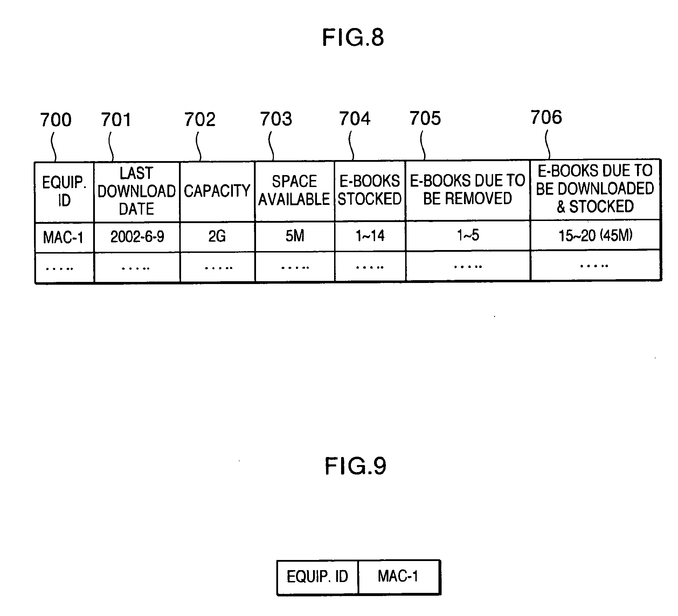

FIG. 8 shows an example of content download and stock data about digital content volumes downloaded and stocked in the storage medium included in the receiving terminal 101. This content download and stock data is managed by the unit of download and stock management 104 of the digital content distribution apparatus 100.

In FIG. 8, reference numeral 700 denotes column, equipment identifierunderwhichthe equipment identifiers of the receiving terminals 101 are set to be used for identifying a particular receiving terminal 10 and its content download and stock data. Reference numeral 701 denotes column, last download date at which the digital content distribution apparatus 100 downloaded digital content to the receiving terminal 101 last time; 702 denotes column, capacity of the storage medium included in the receiving terminal 101; and 703 denotes column, space available which is space currently available in the foregoing storage medium. In the example of FIG. 8, the storage medium included in a receiving terminal with an equipment identifier of MAC-1 has capacity of 2G bytes and its current available space is 5M bytes. Reference numeral 704 denotes column, e-books stocked so far in the receiving terminal 101; 705 denotes column, e-books due to be removed from the receiving terminal 101; and 706 denotes column, e-books due to be newly downloaded and stocked in the receiving terminal 101. These e-books are managed by describing their item numbers (600 in FIG. 7) in the mentioned columns. In this example, next time the receiving terminal 101 with the equipment identifier of MAC-1 becomes online with the digital content distribution apparatus 100, e-books of item numbers 1 to 5 will be removed from the receiving terminal and e-books of item numbers 15 to 20 will be newly downloaded and stocked.

FIG. 9 shows an example of data structure of equipment identifier data which is managed by the unit of equipment identifier data management 105. The equipment identifier data is uniquely assigned to a receiving terminal 101 and the receiving terminal 101 can be identified by this equipment identifier data.

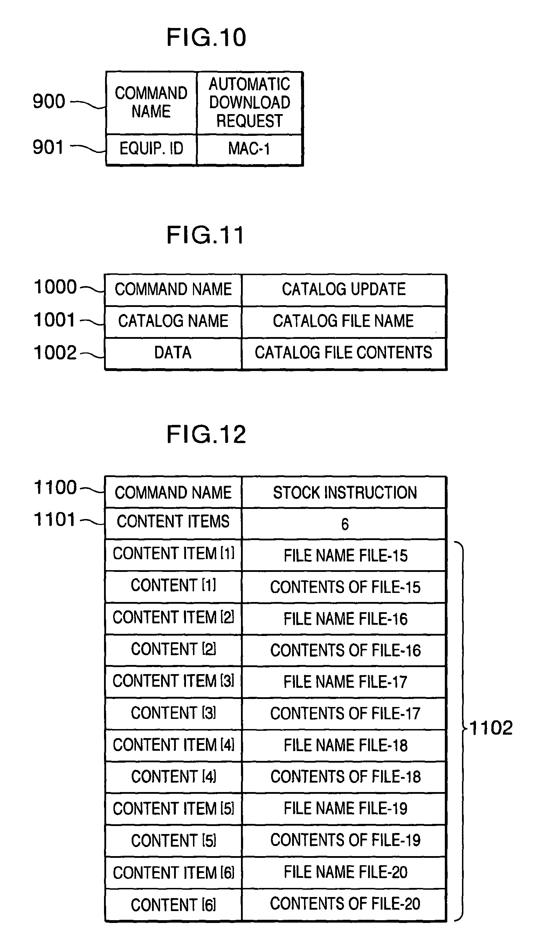

FIG. 10 shows an automatic download request command which is transmitted from a receiving terminal 101 to the digital content distribution apparatus 100 when the receiving terminal 101 becomes online with the digital content distribution apparatus 100. In FIG. 10, command "automatic download request" is specified in a command name field 900 and the equipment identifier of the receiving terminal in a equipment identifier field 901. When the digital content distribution apparatus 100 receives this automatic download request command, the apparatus identifies the receiving terminal and its content download and stock data (FIG. 8) descriptive of the digital content volumes downloaded and stocked in the receiving terminal, based on the equipment identifier 901. Based on the thus identified content download and stock data, the digital content distribution apparatus 100 determines the digital contents of e-books to be removed from the receiving terminal (which can be determined from the column 705 in FIG. 8) and the digital contents of e-books to be newly downloaded and stocked in the receiving terminal (which can be determined from the column 706 in FIG. 8).

FIG. 11 shows a catalog update command which is used for the digital content distribution apparatus 100 to transmit a guide catalog to the receiving terminal 101 when the apparatus receives the automatic download request command, shown in FIG. 10, from the receiving terminal 101. Command "catalog update" is specified in a command name field 1000, catalog file name which is used for the receiving terminal to manage the catalog in a catalog name field 1001, and the contents of the guide catalog file in a data filed 1002. When the receiving terminal 101 receives this command, the terminal stores the file contents specified in the data field 1002 with the file name specified in the catalog name field 1001. If a data file having the same file name as specified in the catalog name field 1001 already exists on the receiving terminal 101, the receiving terminal 101 updates the existing data file. To facilitate service implementation, the same file name should always be specified in the catalog name field 1001 and the name of the file that is used as the guide catalog file should be registered on the display unit 109 beforehand, so that the display unit 109 can recognize the guide catalog file among the data files stored in the receiving terminal 101.

FIG. 12 shows a stock instruction command which is used for the digital content distribution apparatus 100 to transmit the digital contents of e-books to the receiving terminal 101 and have these contents stocked in the receiving terminal 101 when the apparatus receives the automatic download request command, shown in FIG. 10, from the receiving terminal 101. Command "stock instruction" is specified in a command name filed 1100 and the number of digital contents of e-books to be downloaded and stocked, using this command, is set in a field of content items 1101. In data fields 1102, the names of the files containing the digital contents of the e-books to be downloaded and stocked and the file contents are described in order. In the example of FIG. 12, the receiving terminal 101 that receives this command will stock the digital contents of the e-books in the following files: File-15, File-16, File-17, File-18, File-19, and File-20.

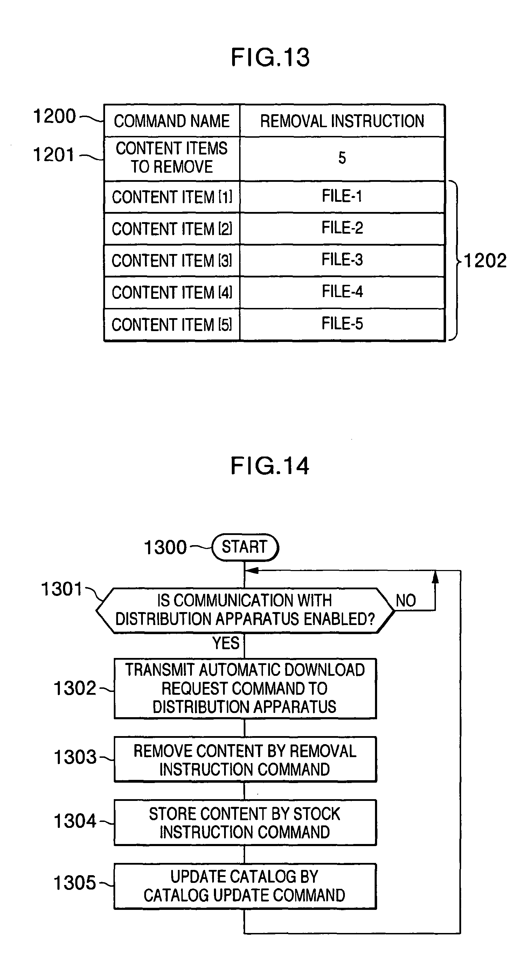

FIG. 13 shows a removal instruction command which is transmitted from the digital content distribution apparatus 100 to the receiving terminal 101 to have specified digital contents of e-books removed from the receiving terminal 101. Command "removal instruction" is specified in a command name field 1200 and the number of digital contents of e-books to be removed, using this command, is set in a field of content items to remove 1201. In data fields 1202, the names of files containing the digital contents of e-books to be removed are specified in a list.

FIG. 14 is a flowchart describing a procedure in which the receiving terminal 101 receives digital content in the digital content distribution system of the present invention and the receiving operation will be explained below by following this flowchart in conjunction with FIGS. 10 through 13.
Step 0) The procedure starts (1300 in FIG. 14).
Step 1) The unit of monitoring communication conditions 106 checks the conditions of communication between the receiving terminal 101 and the digital content distribution apparatus 100. If the communication is enabled, the receiving terminal executes step 2). If not, the receiving terminal waits until the communication becomes enabled (1301 in FIG. 14).
Step 2) The unit of service provision 107 generates the automatic download request command shown in FIG. 10, using the equipment identifier data retained by the unit of equipment identifier data management 105, and transmits this command to the digital content distribution apparatus 100 (1302 in FIG. 14).
Step 3) According to the removal instruction command (FIG. 13) received form the digital content distribution apparatus 100, the unit of service provision 107 removes the files containing the digital contents of the e-books specified in the fields 1202, shown in FIG. 13, out of the e-book files stocked in the storage 108 (1303 in FIG. 14).
Step 4) According to the stock instruction command (FIG. 12) received from the digital content distribution apparatus 100, the unit of service provision 107 additionally stores the files containing the digital contents of the e-books specified in the fields 1102, shown in FIG. 12, into the storage 108 (1304 in FIG. 14).
Step 5) According to the catalog update command (FIG. 11) received from the digital content distribution apparatus 100, the unit of service provision 107 stores the specified catalog file into the storage 108. If the catalog file with the same name already exists, the previously stored data file is removed and then the specified catalog file is stored. The procedure returns to step 1) (1305 in FIG. 14).

Through the above procedure, when communication is enabled between the receiving terminal 101 and the digital content distribution apparatus 100, the receiving terminal 101 notifies the digital content distribution apparatus 100 of its uniquely assigned equipment identifier, using the automatic download request command shown in FIG. 9. In consequence, by the commands, shown respectively in FIGS. 10 to 13, returned from the digital content distribution apparatus 100, the receiving terminal 101 can remove the specified digital contents from the terminal or additionally stock new contents.

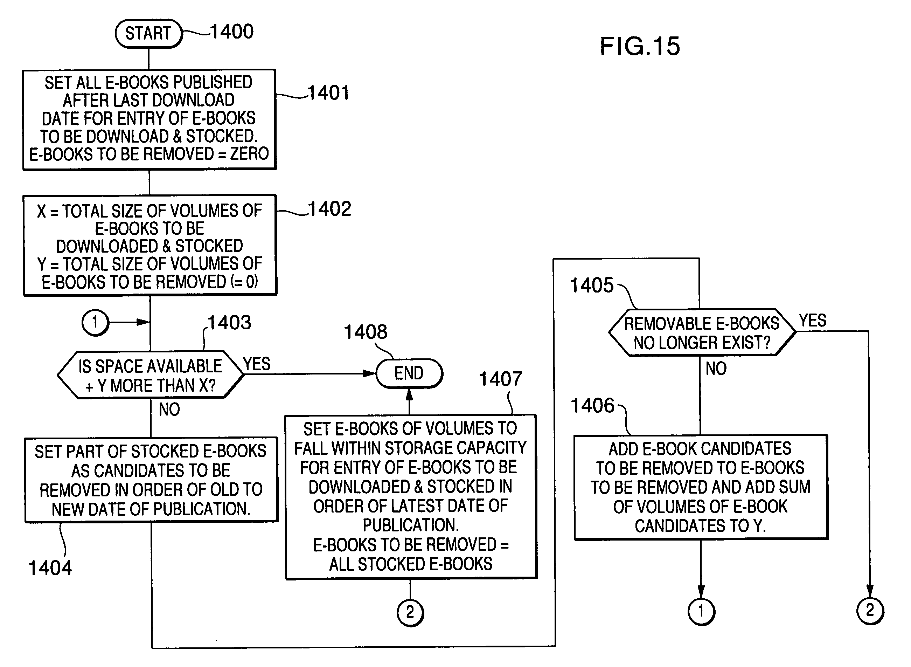

FIG. 15 is a flowchart describing a procedure in which the unit of determining digital content to download 103 of the digital content distribution apparatus 100 lists e-books due to be downloaded and stocked in the receiving terminal 101 (in the column 706 in FIG. 8) and e-books due to be removed from the receiving terminal 101 (in the column 705 in FIG. 8) in the digital content distribution system of the present invention and this operation will be explained below by following this flowchart in conjunction with FIGS. 7 through 13.

The following procedure is executed when new e-books are published and their management information is added to the digital content management information shown in FIG. 7 or on a periodic basis.
Step 0) The procedure starts (1400 in FIG. 15).
Step 1) The item numbers of e-books published after the last download date 701 in the content download and stock data shown in FIG. 8 are set for the entry of e-books due to be downloaded and stocked (in the column 706 in FIG. 8). Meanwhile, the entry of e-books due to be removed (in the column 705 in FIG. 8) is cleared to "zero" (null entry) (1401 in FIG. 15). In the example of FIG. 8, the last download date for the terminal with the equipment identifier of MAC-1 is "2002-6-9" and, thus, the item numbers 15 to 20 of e-books are set for the entry of e-books due to be downloaded and stocked, according to the digital content management information shown in FIG. 7.
Step 2) A total size of all volumes of the e-books set for the entry of e-books due to be downloaded and stocked (in the column 706 in FIG. 8) is assigned to variable X. A total size of all volumes of the e-books set for the entry of e-books due to be removed (= 0) (in the column 705 in FIG. 8) is assigned to variable Y (1402 in FIG. 15). In the case of the example of FIG. 7, the total size of the volumes of the e-books of item numbers 15 to 20 is 45M bytes and, thus, X = 45M bytes and Y = 0. According to the content download and stock data shown in FIG. 8, the space available currently (in the column 703 in FIG. 8) for the receiving terminal identified by the equipment identifier of MAC-1 is 5M bytes. Therefore, the storage space is not enough to store all the e-books set for the entry of e-books due to be downloaded and stocked (in the column 706 in FIG. 8). Accordingly, step 4) and subsequent should be executed to remove some of the e-books stocked in the receiving terminal and provide sufficient space to store the new e-books.
Step 3) It is checked whether the space available (in the column 703 in FIG. 8) + Y is more than X; that is, if all the e-books set for the entry of e-books due to be removed (in the column 705 in FIG. 8) are removed from the receiving terminal, it is checked whether sufficient space can be provided to store all the e-books set for the entry of e-books due to be downloaded and stocked (in the column 706 in FIG. 8). If sufficient space can be provided, the procedure proceeds to step 8); if not, the procedure proceeds to step 4) (1403 in FIG. 15).
Step 4) Each time this step is executed, from among the e-books stocked in the receiving terminal 101, the item numbers of the e-books are set by gradual steps in order of old to new date of publication as candidates to be removed. In the example of the digital content management information shown in FIG. 7, the item numbers 1 to 14 of e-books should be set in order as candidates to be removed (1404 in FIG. 15).
Step 5) As the result of step 4), if removable e-books no longer exist as candidates to be removed (all the e-books stocked have been set as candidates to be removed), the procedure proceeds to step 7). If one or more e-books that are not yet set as candidates to be removed remain, the procedure proceeds to step 6) (1405 in FIG. 15).
Step 6) The e-book candidates to be removed are added to the e-books due to be removed (in the column 705 in FIG. 8). Moreover, the size of the volumes of the e-book candidates to be removed is added to Y and the procedure returns to step 3) (1406 in FIG. 15).
Step 7) This step is executed when it is impossible to provide sufficient space to store all the e-books set for the entry of e-books due to be downloaded and stocked (in the column 706 in FIG. 8), even if all e-books stocked in the receiving terminal are removed. Accordingly, the number of the e-books due to be downloaded and stocked (in the column 706 in FIG. 8) is reduced to the e-books of volumes to fall within the capacity (the column 702 in FIG. 8) of the storage of the receiving terminal, wherein the e-books are set remaining in order of latest date of publication, thus having the e-books of new publication date stocked preferentially. Meanwhile, the e-books stocked (in the column 704 in FIG. 8) are set for the e-books due to be removed (in the column 705 in FIG. 8), so that all the e-books currently stocked in the receiving terminal will be removed (1407 in FIG. 15).
Step 8) The procedure terminates (1408 in FIG. 15).

Through the above procedure, the e-books due to be downloaded and stocked in the receiving terminal (in the column 706 in FIG. 8) and the e-books due to be removed from the receiving terminal (in the column 705 in FIG. 8) are listed. This procedure is designed so that, among e-books managed by the digital content management unit 102 of the digital content distribution apparatus 100, those of later publication date can preferentially be downloaded and stocked in the receiving terminal 101.

When the digital content distribution apparatus 100 receives the automatic download request command shown in FIG. 10 from a receiving terminal 101, the unit of determining digital content to download 103 obtains the e-books due to be removed (in the column 705 in FIG. 8) associated with the receiving terminal from the content download and stock data, based on the equipment identifier (901 in FIG 10) specified in the command, generates the removal instruction command shown in FIG. 13, according to the obtained e-books due to be removed (705 in FIG. 8), transmits this command to the receiving terminal 101, and thereby can have the specified e-books removed from the receiving terminal 101. According to the e-books due to be downloaded and stocked (in the column 706 in FIG. 8) associated with the receiving terminal, the unit of determining digital content to download 103 also generates the stock instruction command shown in FIG. 12, transmits this command to the receiving terminal 101, and thereby can have the specified e-books downloaded and stocked in the receiving terminal 101.

After transmitting the removal instruction command (FIG. 13) to the receiving terminal 101, the digital content distribution apparatus 100 deletes the item numbers of the e-books set for the entry of e-books due to be removed (in the column 705 in FIG. 8) for the receiving terminal from the e-books stocked (in the column 704 of FIG. 8) associated with the receiving terminal and adds the total size of volumes of the deleted e-books to the space available (in the column 703 in FIG. 8). After transmitting the stock instruction command (FIG. 12) to the receiving terminal 101, the digital content distribution apparatus 100 adds the item numbers of the e-books set for the entry of e-books due to be downloaded and stocked (in the column 706 in FIG. 8) for the receiving terminal to the e-books stocked (in the column 704 in FIG. 8) associated with the receiving terminal and subtracts the total size of volumes of the added e-books from the space available (in the column 703 in FIG. 8). In this manner, the digital content distribution apparatus 100 can manage the e-books stocked in the receiving terminal 101 and space available in the storage medium included in the receiving terminal 101.

The guide catalog for the digital contents of e-books stocked in the receiving terminal 101 is created, based on the digital content management information shown in FIG. 6; that is, based on the information about the e-books actually stocked in the receiving terminal 101. Specifically, the catalog contains information (e-book title, author name, genre, summary, and file name) for the e-book item numbers specified for the entry of e-books stocked (in the column 704 in FIG. 8) generated through the foregoing process.

As described above, in the digital content distribution system according to the Embodiment 1, when the unit of monitoring communication conditions 106 of a receiving terminal 101 detects that communication has become enabled between the receiving terminal 101 and the digital content distribution apparatus 100, the receiving terminal automatically notifies the digital content distribution apparatus 100 of its equipment identifier data for identifying the receiving terminal 101. Based on the equipment identifier data received from the receiving terminal 101, the unit of determining digital content to download 103 of the digital content distribution apparatus 100 obtains the content download and stock data associated with the receiving terminal having that equipment identifier from the unit of download and stock management 104, determines digital content items to download to the receiving terminal 101, based on the obtained content download and stock data, and can exert control over having the thus determined digital content items downloaded and stocked in the receiving terminal 101. Using this system, for example, the provider side can download e-books intended for sales to end users and the catalog for selling the e-books to the users' receiving terminals and have them stocked in the receiving terminals during communication-on with the receiving terminals and can provide service that the users can look for and buy a desired e-book from the catalog stocked in the receiving terminals whenever they want to buy, even when the communication with the digital content distribution apparatus is off.

### (Second embodiment)

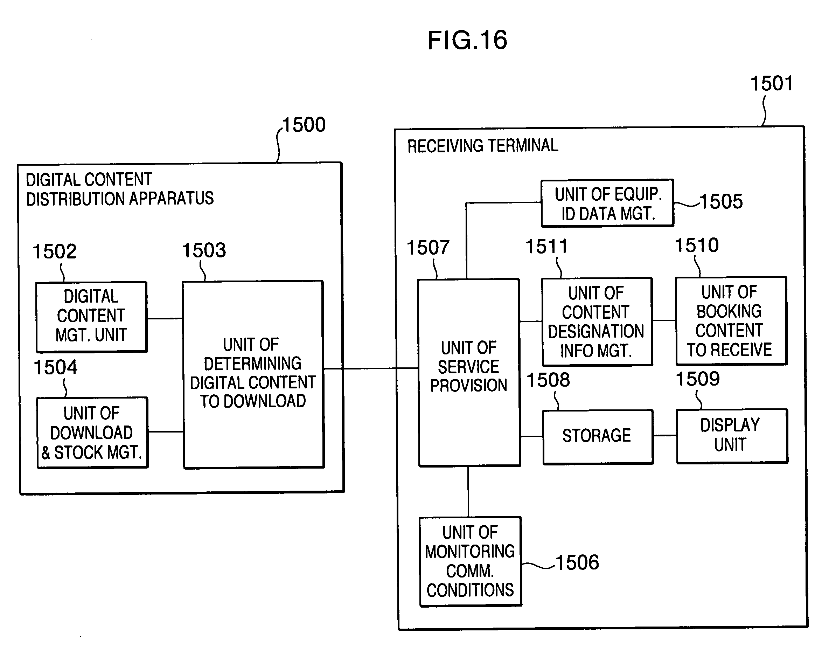

FIG. 16 is a diagram showing another example of configuration of a digital content distributionsystem according to the present invention. In FIG. 16, reference numeral 1500 denotes a digital content distribution apparatus for distributing digital content; 1501 denotes a receiving terminal which receives digital content distributed from the digital content distribution apparatus 1500, wherein the receiving terminal is one of the receiving terminals connectable to the digital content distribution apparatus; 1502 denotes a digital content management unit which manages digital content items; 1503 denotes a unit of determining digital content to download which receives content designation information about digital content items that the user wants to download from a receiving terminal 1501 and downloads the digital content items specified by the content designation information to the receiving terminal 1501; 1504 denotes a unit of download and stock management which manages content download and stock data about digital content volumes downloaded and stocked in a storage medium included in the receiving terminals 1501; 1505 denotes a unit of equipment identifier data management which retains equipment identifier data; 1506 denotes a unit of monitoring communication conditions which monitors the conditions of communication between the receiving terminal 1501 and the digital content distribution apparatus 1500; 1507 denotes a unit of service provision which checks whether an unit of content designation information management 1511 retains content designation information when communication is enabled between the digital content distribution apparatus 1500 and the receiving terminal 1501, if the content designation information is retained, requests the digital content distribution apparatus 1500 to download user-desired digital content, using the content designation information, and receives the content; 1508 denotes storage which stores digital content and related data received from the digital content distribution apparatus 1500; 1509 denotes a display unit which accepts request for digital content rendering with a content designator from the user and displays the designated digital content; 1510 denotes a unit of booking content to receive which registers the foregoing content designation information if the digital content designated by the content designation information is not stored in the storage 1508; and 1511 denotes the unit of content designation information management which retains the content designation information registered by the unit of booking content to receive 1510.

Noticeable features of the digital content distribution system of Embodiment 2 are as follows. The unit of booking content to receive 1510 and the unit of content designation information management 1511 are added to the configuration of the receiving terminal 101 described in Embodiment 1. The unit of service provision 1507 checks whether the unit of content designation information management 1511 retains content designation information when communication with the digital content distribution apparatus 1500 is enabled, if the content designation information is retained, requests the digital content distribution apparatus 1500 to download user-desired digital content, using the content designation information, and receives the content from the digital content distribution apparatus 1500.

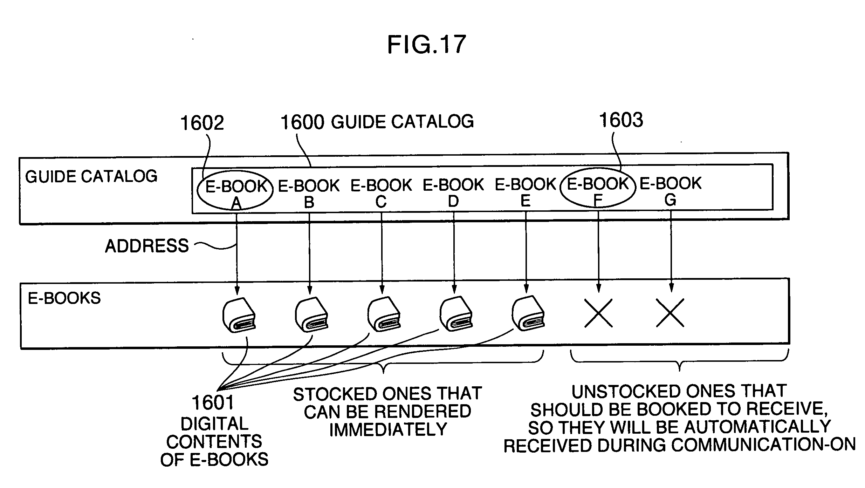

FIG. 17 is a diagram showing a relationship between the guide catalog and the digital contents of the e-books which are stocked or can be stocked in the storage medium included in the receiving terminal 1501. This diagram differs from the diagram of FIG. 6 used for describing the digital content distribution system of Embodiment 1 in the following respect: information (e-book title, author name, genre, and address (filename)) about the e-book contents actually stocked in the receiving terminal is described in the guide catalog 500 in FIG. 6, whereas the guide catalog 1600 in FIG. 17 includes information about e-book contents not stocked in the receiving terminal. In the example of FIG. 17, the digital contents of e-books A to E described in the guide catalog are stocked in the receiving terminal 1501, but the digital contents of e-books F and G are not stocked in the receiving terminal 1501. This guide catalog can give the user information about all e-books that the provider that runs the digital content distribution apparatus 1500 can provide to the user, regardless of whether or not the e-books are stocked in the receiving terminal 1501. When the user selects an e-book (one of the e-books A to F) already stocked in the receiving terminal 1501, the e-book can immediately be rendered to the user. When the user selects an e-book (either F or G) not stocked in the receiving terminal 1501, the receiving terminal 1501 must receive the e-book from the digital content distribution apparatus 1500.

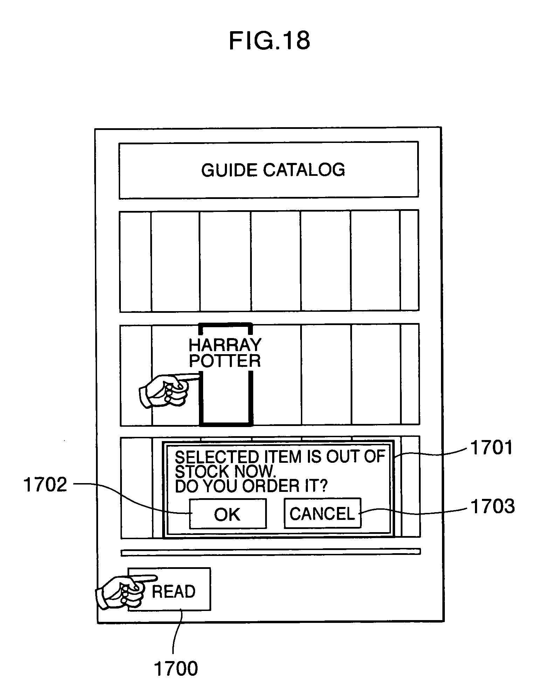

FIG. 18 shows an example of displaying a message box 1701 which is displayed when the user selects an e-book not stocked in the receiving terminal 1501 (for example, e-book F or G in FIG. 17) at the guide catalog display screen shown in FIG. 3 and tries to begin reading. In the example of FIG. 18, the scenario is that, when e-book content "Harray Potter" is not stocked in the receiving terminal 1501, the user selects this e-book and clicks on the read button 1700. In this example, a message "Selected item is now out of stock. Do you order it?" is displayed to inform the user that the e-book "Harray Potter" cannot be rendered immediately. When the user clicks on an OK button 1702, the unit of booking content to receive 1510 generates information for booking the content to receive, using the e-book content designator information, in order to receive the e-book content from the digital content distribution apparatus 1500 and the information for booking is retained in the unit of content designation information management 1511. When the user clicks on a cancel button 1703, the information for booking is not generated and the display returns to the guide catalog display screen shown in FIG. 3.

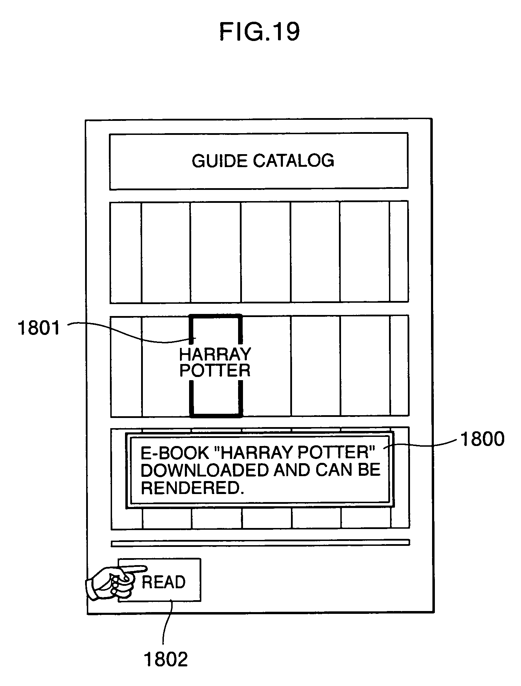

FIG. 19 is an example of displaying a message box to inform the user that the process of content booking and receiving has been completed when the receiving terminal 1501 receives the e-book content from the digital content distribution apparatus 1500, using the content designation information. In the example of FIG. 19, a message "e-Book "Harray Potter" downloaded and can be rendered" is displayed to inform the user that receiving the e-book content "Harray Potter" from the digital content distribution apparatus 1500 is complete, so the user can begin reading of the e-book "Harray Potter." In this example, the e-book title ("Harray Potter") labeled on the spine that has now been stocked additionally in the receiving terminal 1501 is grayed so that the user can easily find it (1801).

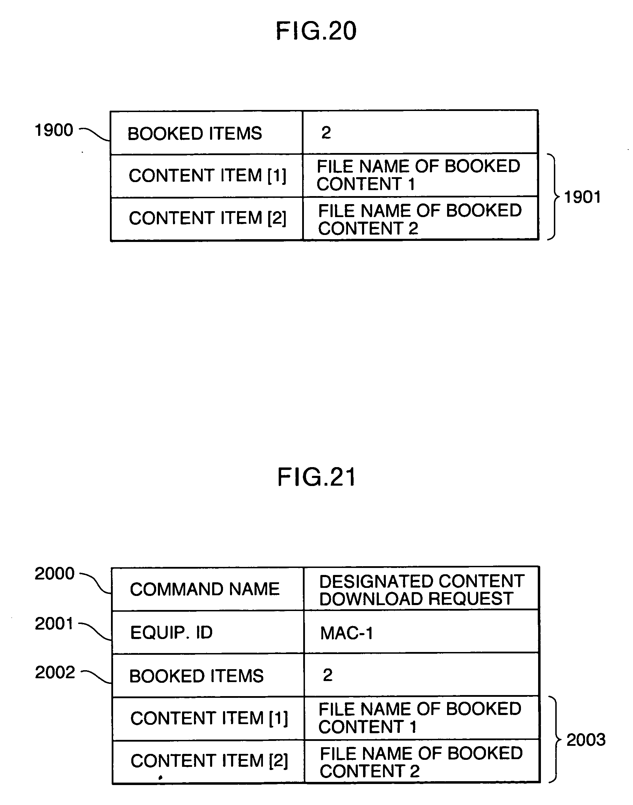

FIG. 20 shows an example of content designation information retained by the unit of content designation information management 1511. A field of booked items 1900 contains the number of e-book content items booked to receive, which corresponds to the number of items of content designation information retained by the unit of content designation information management 1511. In fields 1901, the names of the files of the e-book contents are described as content designation information for designating the booked e-book contents. As noted hereinbefore, the file names of the e-book contents are described in the guide catalog.

FIG. 21 shows a designated content download request command which is generated, based on the content designation information shown in FIG. 20, and transmitted from the receiving terminal 1501 to the digital content distribution apparatus 1500 when communication is enabled between the receiving terminal 1501 and the digital content distribution apparatus 1500. In FIG. 21, command "designated content download request" is specified in a command name field 2000 and the equipment identifier of the receiving terminal 1501 in an equipment identifier field 2001. The number of booked e-book content items is set in a field of booked items 2002, which is the same as set in the booked items field (1900) in FIG. 20. In data fields 2003, the file names of the booked e-book contents are set in order, copied from the fields 1900 in FIG. 20. When the digital content distribution apparatus 1500 receives this designated content download request command, the apparatus identifies the receiving terminal and its content download and stock data (FIG. 8) descriptive of the digital content volumes downloaded and stocked in the receiving terminal, based on the equipment identifier 2001. Based on the thus identified content download and stock data, the apparatus determines if sufficient space for storing the e-book contents in the files specified in the fields 2003 is available (can be determined from the column 703 in FIG. 8). If sufficient space is not available, the apparatus determines e-book content items to be removed from the receiving terminal and transmits the removal instruction command (FIG. 13) to remove the content items determined to be removed. After thus making sufficient space available in storage of the receiving terminal 1501, the apparatus transmits the stock instruction command (FIG. 12) which is generated, based on the e-book content items to be newly stocked (in the files specified in the fields 2003), thus having the e-book contents in the files specified in the fields 2003 stocked in the receiving terminal 1501.

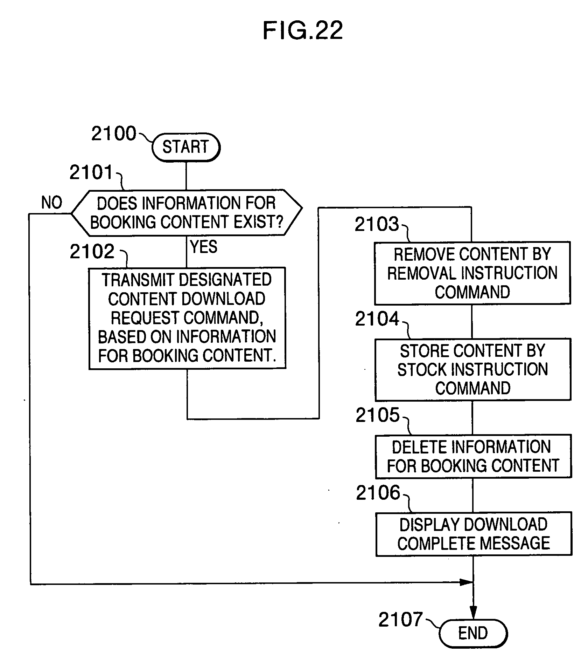

FIG. 22 is a flowchart describing a procedure in which the receiving terminal 1501 receives digital content, based on the content designation information shown in FIG. 20, in the digital content distribution system of the present invention and this operation will be explained below by following this flowchart in conjunction with FIGS. 8, 12, 13, and 19 through 21. This procedure is performed when communication is enabled between the receiving terminal 1501 and the digital content distribution apparatus 1500, detected by the unit of monitoring communication conditions 1506 which checks the conditions of communication between the receiving terminal 1501 and the digital content distribution apparatus 1500.
Step 0) The procedure starts (2100 in FIG. 22).
Step 1) The unit of service provision 1507 checks whether the unit of content designation information management 1511 retains content designation information. If the content designation information exists, the procedure proceeds to step 3) ; if not, the procedure proceeds to step 7) (2101 in FIG. 22)
Step 2) The designated content download request command in FIG. 21 is generated from the content designation information (FIG. 20) retained by the unit of content designation information management 1511 and the equipment identifier data retained by the unit of equipment identifier data management 1505 and transmitted to the digital content distribution apparatus 1500 (2102 in FIG. 22).
Step 3) According to the removal instruction command (FIG. 13) received from the digital content distribution apparatus 1500, the unit of service provision 1507 removes the files of e-book contents specified in the fields 1202 of the command, shown in FIG. 13, out of the files of the e-book contents stocked in the storage 1508 (2103 in FIG. 22). If sufficient space for stocking the files of the e-book contents specified in the designated content download request command 2003 shown in FIG. 21 does not exist in the storage of the receiving terminal 1501, this removal instruction command is transmitted from the digital content distribution apparatus 1500 to have e-book contents of old publication date removed from the storage and provide sufficient space.
Step 4) According to the stock instruction command (FIG. 12) received from the digital content distribution apparatus 1500, the unit of service provision 1507 additionally stores the files of the digital contents specified in the data fields 1102 of the command, shown in FIG. 12, into the storage 1508 (2104 in FIG. 22). The data fields of this stock instruction command contain the files of the e-book contents specified in the fields 2003 of the designated content download request command shown in FIG. 21.
Step 5) Because the completion of receiving the user-desired e-book contents, using the content designation information, the content designation information shown in FIG. 20 is deleted from the unit of content designation informationmanagement 1511 (2105 in FIG. 22).
Step 6) The download complete message (1800) shown in FIG. 19 is displayed to inform the user that receiving the user-desired e-book contents is complete (2106 in FIG. 22).
Step 7) The procedure terminates (2107 in FIG. 22).

Through the above procedure, when communication is enabled between the receiving terminal 1501 and the digital content distribution apparatus 1500, the receiving terminal 1501 checks whether the unit of content designation information management 1511 retains content designation information, if the content designation information is retained, can request the digital content distribution apparatus 1500 to download user-desired content, using the content designation information, and receive the content from the digital content distribution apparatus 1500.

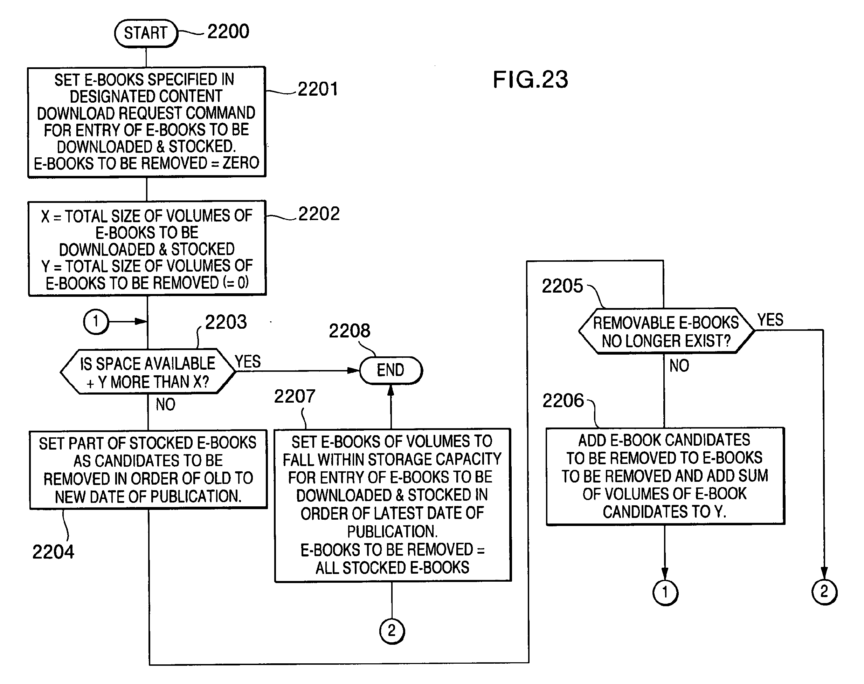

FIG. 23 is a flowchart describing a procedure in which the unit of determining digital content to download 1503 of the digital content distribution apparatus 1500 generates the removal instruction command (FIG. 13) and the stock instruction command (FIG. 12) upon having received the designated content download request command shown in FIG. 21 from the receiving terminal 1501 in the digital content distribution system of the present invention. This operation will be explained below by following this flowchart in conjunction with FIGS. 8, 12, 13, and 21.
Step 0) The procedure starts (2200 in FIG. 23).
Step 1) The designators of the e-book files specified in the fields (2003) of the designated content download request command shown in FIG. 21 are set for the entry "e-books due to be downloaded and stocked" of the content download and stock data list. Meanwhile, the entry "e-books due to be removed" is cleared to "zero" (null entry) (2201 in FIG. 23).
Step 2) A total size of all volumes of the e-books set for the entry "e-books due to be downloaded and stocked" is assigned to variable X. A total size of all volumes of the e-books set for the entry "e-books due to be removed" (= 0) is assigned to variable Y (2202 in FIG. 23).
Step 3) It is checked whether the space available (in the column 703 in FIG. 8) + Y is more than X; that is, if all the e-books set for the entry of "e-books due to be removed" are removed from the receiving terminal, it is checked whether sufficient space can be provided to store all the e-books set for the entry of "e-books due to be downloaded and stocked." If sufficient space can be provided, the procedure proceeds to step 8); if not, the procedure proceeds to step 4) (2203 in FIG. 3).
Step 4) Each time this step is executed, from among the e-books stocked in the receiving terminal 1501, the item numbers of the e-books are set by gradual steps in order of old to new date of publication as candidates to be removed. If all the items of e-books listed in the digital content management information shown in FIG. 7 are stocked in the receiving terminal 1501, the item numbers 1 to 20 of the e-books should be set in order as candidates to be removed (2204 in FIG. 23).
Step 5) As the result of step 4), if removable e-books no longer exist as candidates to be removed (all the e-books stocked have been set as candidates to be removed), the procedure proceeds to step 7). If one or more e-books that are not yet set as candidates to be removed remain, the procedure proceeds to step 6) (2205 in FIG. 23).
Step 6) The e-book candidates to be removed are added to the "e-books due to be removed." Moreover, the sum of the volumes of the e-book candidates to be removed is added to Y and the procedure returns to step 3) (2206 in FIG. 23).
Step 7) This step is executed when it is impossible to provide sufficient space to store all the e-books set for the entry "e-books due to be downloaded and stocked, " even if all e-books stocked in the receiving terminal are removed. Accordingly, the number of e-books set in the entry "e-books due to be downloaded and stocked" is reduced to the e-books of volumes to fall within the capacity of the storage of the receiving terminal, wherein the e-books are set remaining in order of latest date of publication, thus having the e-books of new publication date stocked preferentially. Meanwhile, the e-books stocked (in the column 704 in FIG. 8) are set for the entry "e-books due to be removed," so that all the e-books currently stocked in the receiving terminal will be removed (2207 in FIG. 23).
Step 8) The procedure terminates (2208 in FIG. 23).

Using the setting of "e-books due to be removed" generated through the above procedure, the removal instruction command shown in FIG. 13 is generated and transmitted to the receiving terminal 1501. Specifically, in the fields 1202 of the command shown in FIG. 13, e-book file names associated with the item numbers of e-books specified in the entry "e-books due to be removed" are set in order (the file names can be obtained from the digital content management information shown in FIG. 7). Similarly, using the setting of "e-books due to be downloaded and stocked," the stock instruction command shown in FIG. 12 is generated and transmitted to the receiving terminal 1501. Specifically, in the fields 1102 of the command shown in FIG. 12, e-book file names and files associated with the item numbers of e-books specified in the entry "e-books due to be downloaded and stocked" are set in order (the file names can be obtained from the digital content list shown in FIG. 7).

After transmitting the removal instruction command (FIG. 13) to the receiving terminal 1501, the digital content distribution apparatus 1500 deletes the item numbers of the e-books set for the entry "e-books due to be removed" for the receiving terminal from the e-books stocked (in the column 704 of FIG. 8) associated with the receiving terminal and adds the total size of volumes of the deleted e-books to the space available (in the column 703 in FIG. 8). After transmitting the stock instruction command (FIG. 12) to the receiving terminal 1501, the digital content distribution apparatus 1500 adds the item numbers of the e-books set for the entry "e-books due to be downloaded and stocked" for the receiving terminal to the e-books stocked (in the column 704 in FIG. 8) associated with the receiving terminal and subtracts the total size of volumes of the added e-books from the space available (in the column 703 in FIG. 8). In this manner, the digital content distribution apparatus 1500 can manage the e-books stocked in the receiving terminal 1501 and space available in the storage medium included in the receiving terminal 1501.

As described above, in the digital content distribution system according to Embodiment 2, when the unit of monitoring communication conditions 1506 of a receiving terminal 1501 detects that communication has become enabled between the receiving terminal 1501 and the digital content distribution apparatus 1500, the unit of service provision 1507 checks whether the unit of content designation information management 1511 retains content designation information, if the content designation information is retained, generates the designated content download request command shown in FIG. 21, using the content designation information, and transmits this command to the digital content distribution apparatus 1500. On the other hand, the digital content distribution apparatus 1500, when it receives the designated content download request command shown in FIG. 21 from the receiving terminal 1501, obtains the content download and stock data associated with the receiving terminal from the unit of download and stock management 1504 and checks whether sufficient storage space to store the user-desired digital content volumes exists on the receiving terminal 1501, according to the obtained content download and stock data. If sufficient storage space does not exist, the digital content distribution apparatus 1500 transmits the removal instruction command (FIG. 13), thereby removing part of the digital content volumes previously stocked in the receiving terminal 1501 in order of old to new date of publication. After thus providing sufficient storage space in the receiving terminal, the digital content distribution apparatus 1500 transmits the stock instruction command (FIG. 12) and can thereby have the user-desired digital content specified in the designated content download request command shown in FIG. 21 stocked assuredly.

### (Third embodiment)

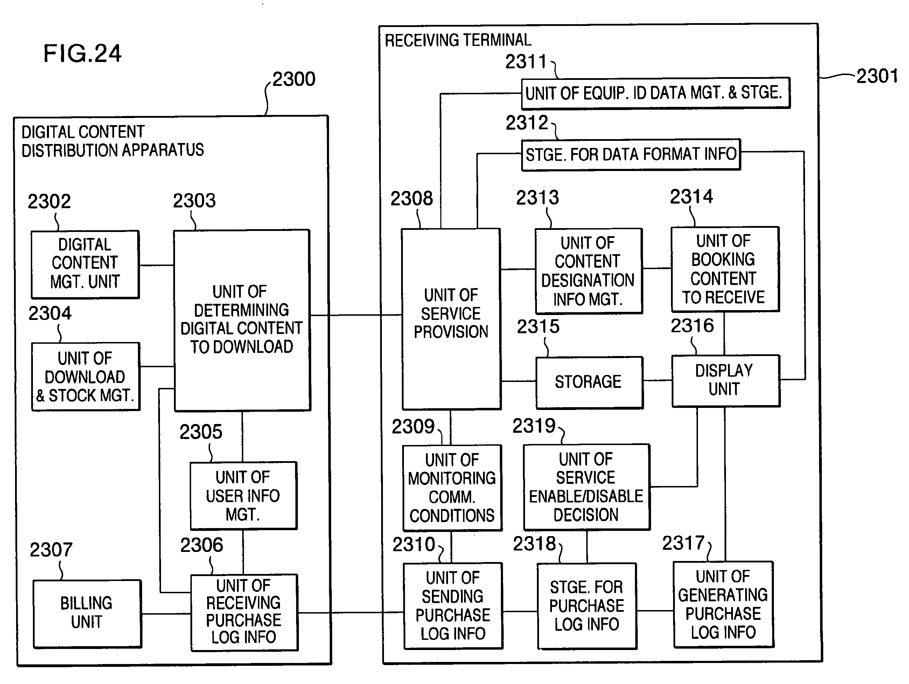

FIG. 24 is a diagram showing yet another example of configuration of a digital content distribution system according to the present invention. In FIG. 24, reference numeral 2300 denotes a digital content distribution apparatus for distributing digital content; 2301 denotes a receiving terminal which receives digital content distributed from the digital content distribution apparatus 2300, wherein the receiving terminal is one of the receiving terminals connectable to the digital content distribution apparatus; 2302 denotes a digital content management unit which manages digital content items; 2303 denotes a unit of determining digital content to download which receives from a receiving terminal 2301 equipment identifier data uniquely as signed to the receiving terminal 2301, determines digital content to download to the receiving terminal, based on the received equipment identifier data, and downloads the digital content to the receiving terminal; 2304 denotes a unit of download and stock management which manages content download and stock data about digital content volumes downloaded and stocked in the receiving terminals 2301; 2305 denotes a unit of user information management which manages user information about the users of the receiving terminals 2301 associated with the equipment identifiers; 2306 denotes a unit of usage history information management which manages usage history information about digital content purchased at the receiving terminals 2301; 2307 denotes a billing unit which identifies a user, based on the foregoing equipment identifier data and user information received from the receiving terminals 2301, and bills the thus identified user, according to the foregoing usage history information; 2308 denotes a unit of service provision which sends the equipment identifier data to the digital content distribution apparatus and receives digital content distributed from the digital content distribution apparatus 2300 when communication is enabled between the digital content distribution apparatus 2300 and the receiving terminal 2301; 2309 denotes a unit of monitoring communication conditions which monitors the conditions of communication between the receiving terminal 2301 and the digital content distribution apparatus 2300; 2310 denotes a unit of transmitting usage history information which transmits the foregoing usage history information to the digital content distribution apparatus 2300 when communication is enabled between the digital content distribution apparatus 2300 and the receiving terminal 2301; 2311 denotes a unit of equipment identifier data management which manages the foregoing equipment identifier data; 2312 denotes a storage block for data format information for storing information about data formats in which the receiving terminal 2301 can display content; 2313 denotes a unit of content designation information management which retains content designation information which is used for receiving designated digital content from the digital content distribution apparatus 2300 when communication is enabled between the digital content distribution apparatus 2300 and the receiving terminal 2301; 2314 denotes a unit of booking content to receive which registers the foregoing content designation information to the unit of content designation information management; 2315 denotes storage which stores digital content and related data received from the digital content distribution apparatus 2300; 2316 denotes a display unit which displays digital content retrieved from the storage 2315; 2317 denotes a unit of generating usage history information which generates the foregoing usage history information; 2318 denotes a storage block for usage history information for storing the foregoing usage history information; and 2319 denotes a unit of service enable/disable decision which checks to see that the foregoing usage history information has been sent to the digital content distribution apparatus 2300 within a predetermined period after the user submits the purchase of a digital content item and stops the service of the receiving terminal 2301 if that information has not been sent.

In the following, the operation of the thus configured digital content distributionsystem will be described concretely, using an example of e-book distribution service which is intended for selling e-books. It should be appreciated that the digital content distribution system of the present invention is applicable to not only e-books, but also music and other digital content distribution service.

First, system functions which are implemented by the digital content distribution system of the present invention will be recited and, then, the system operation for implementing these system functions will be described.

### 1) Automatic download function

When communication with a receiving terminal 2301 is enabled, the digital content distribution apparatus 2300 automatically downloads a guide catalog for e-books and the e-books to sell to the receiving terminal 2301. The receiving terminal 2301 stocks the received digital content and related data in the storage medium included in the receiving terminal 2301. According to the space available in the storage medium of the receiving terminal 2301, e-books of later publication are preferentially downloaded to the receiving terminal 2301.

### 2) Function of downloading content responsive to user preferences

When e-books are downloaded by the foregoing automatic download function 1), those that are reckoned fit for the preference of an individual user are preferentially downloaded, based on usage history information about digital content items that users purchased at their receiving terminals 2301.

### 3) Purchase function

A user can perform a purchase procedure for an e-book to the user's likening, referring to the guide catalog. If the desired e-book has already been stocked in the receiving terminal 2301, the user can purchase and enjoy it immediately, regardless of whether or not the terminal is online with the digital content distribution apparatus 2300.

### 4) Purchase booking and download function

If an e-book that the user wants to buy is not stocked in the receiving terminal 2301, purchase booking canbe performed. Once purchase booking of an e-book has been done, when communication has become enabled between the receiving terminal 2301 and the digital content distribution apparatus 2300, the user-desired e-book is received from the digital content distribution apparatus 2300 and stocked and a message is displayed to inform the user that the desired e-book has been downloaded. The thus received e-book can be purchased by the foregoing purchase function 3).

### 5) Transmitting usage history information and billing function

When the user purchases an e-book, the receiving terminal 2301 generates usage history information about the e-book. When the terminal becomes online with the digital content distribution apparatus 2300, it transmits the generated usage history information to the digital content distribution apparatus 2300. The digital content distribution apparatus 2300 bills the user, based on the usage history information received from the receiving terminal 2301.

### 6) Service enable/disable decision function

The receiving terminal 2301 checks to see that the foregoing usage history information is sent to the digital content distribution apparatus 2300 within a predetermined period after the user submits the purchase of an e-book. If this information is not sent within the predetermined period, the receiving terminal 2301 is restrained from being operated by the user and set unserviceable.

In this relation, it may be preferable to control the display unit 2316 to make it impossible to display an e-book that the user submitted its purchase, but have not sent its usage history, not making all functions of the receiving terminal 2301 unserviceable.

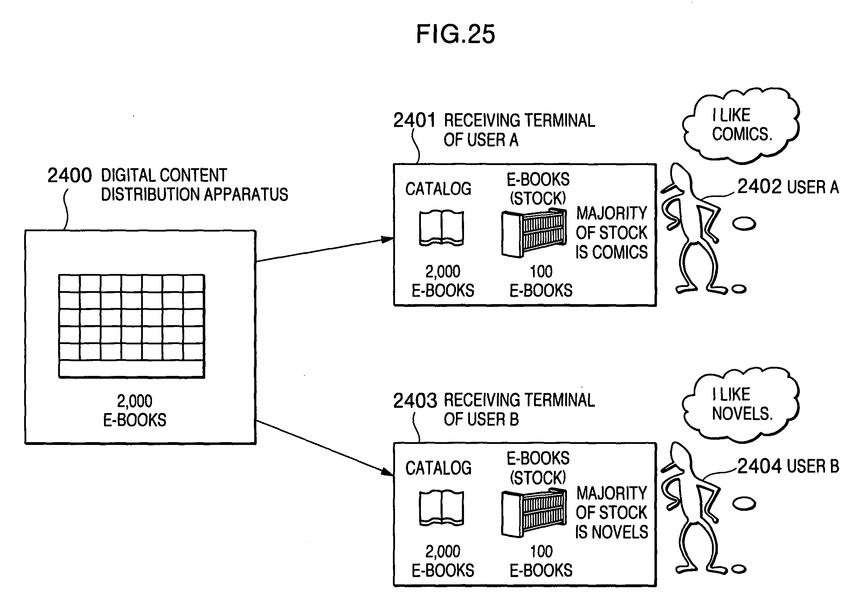

FIG. 25 is an illustration for explaining the function of downloading content responsive to user preferences 2).

In the following, the function of downloading content responsive to user preferences 2) will be described in further detail, using FIG. 25.

In the example of FIG. 25, the scenario is that the digital content distribution apparatus 2400 keeps and manages 2,000 volumes of e-books and can distribute and sell these e-books. However, the number of e-books that can be stocked in the receiving terminals of users is limited because of capacity limitations of the storage medium included in the user receiving terminals. Thus, the digital content distribution apparatus 2400 is provided with a function of preferentially downloading lately published new e-books that are reckoned fit for individual user's preference. For example, if user A 2402 has often purchased comics, the digital content distribution apparatus 2400 infers that user A 2402 of the receiving terminal 2401 has a taste for comics by checking the usage history information sent from the receiving terminal 2401 of user A and, thus, downloads e-books of comics to the receiving terminal 2401 of user A to have the e-books of comics stocked preferentially in the terminal. Similarly, if user B 2403 has often purchased novels, the distribution apparatus downloads e-books of novels to the receiving terminal 2403 of user B to have the e-books of novels stocked preferentially in the terminal. Guide catalogs of e-books that are also downloaded to the receiving terminals contain information about all 2,000 volumes of e-books being managed by the digital content distribution apparatus 2400. Thus, the users can select an e-book that is not stocked in the receiving terminals as the purchasable item. When the user wants to buy an e-book not stocked in the receiving terminal, the user can perform purchase booking by the foregoing purchase booking and download function 4).

The relationship between the guide catalog and the e-books available on a receiving terminal explained for the digital content distribution system of Embodiment 2, using FIG. 17, is also true for Embodiment 3, and, therefore, its explanation is not repeated here.

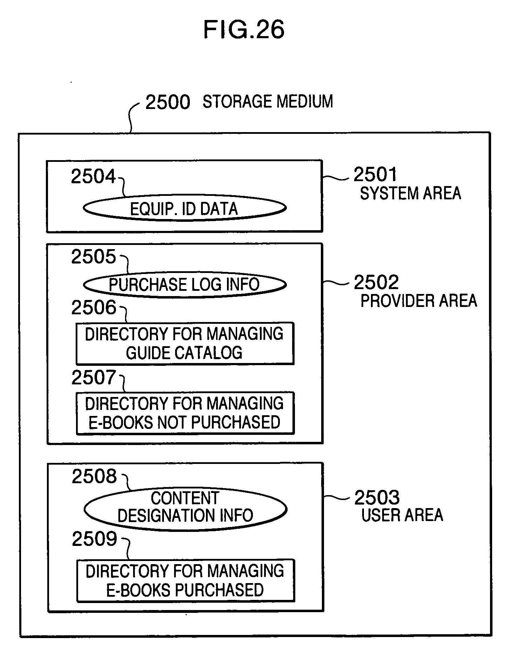

FIG. 26 is a diagram showing management constitution for digital content and other data that are managed on the receiving terminal 2301.

Referring to FIG. 26, the receiving terminal 2301 includes the storage medium 2500. A system area 2501 is for registering the equipment identifier data 2504 which is uniquely assigned to the receiving terminal 2301 when the terminal is shipped from the factory to the market. The data stored in the system area 2501 is protected so that the user cannot alter or erase the data. A provider area 2502 is for managing the guide catalog and e-book contents downloaded from the digital content distribution apparatus 2300 and this area is also protected so that the user cannot alter or erase the data stored therein. A user area 2503 can be used freely by the user and data stored in this area can be altered or erased by user intention. The provider area 2502 comprises a portion for usage history information 2505 about e-book items purchased by the user, a directory 2506 for managing the guide catalog of e-books downloaded from the digital content distribution apparatus 2300, and a directory 2507 for managing e-books not purchased by the user afterbeing downloaded fromthe digital content distribution apparatus 2300. The e-books managed in the directory 2507 for managing e-books not purchased are protected by encryption means or the like so that the user cannot read them until purchasing them. The user area 2503 comprises a portion for content designation information 2508 which is used to implement the foregoing purchase booking and download function 4) and a directory 2509 for managing e-books purchased by the user. When the user purchases an e-book selected from the guide catalog, the e-book managed under the directory 2507 is copied to the directory 2509. The user can read the e-book content managed under this directory 2509.

FIG. 27 shows an example of digital content management information for managing e-book content items and this digital content management information is managed by the digital content management unit 2302 of the digital content distribution apparatus 2300. The digital content management information shown in FIG. 27 contains the same entries as the digital content management information shown in FIG. 7 has, which has been used to explain the digital content distribution system of Embodiment 1, except that a column, price (2608) of each e-book is added to the list. Therefore, its detailed explanation is not repeated.

FIG. 28 shows an example of user information about users and this user information is managed by the unit of user information management 2305 of the digital content distribution apparatus 2300.

In FIG. 28, reference numeral 2700 denotes column, user identifier 2700 under which the identifiers assigned to the users are registered for user management; 2701 denotes column, name of user; 2702 denotes column, address of user; 2703 denotes column, credit card number which is required for billing an individual user; and 2704 denotes column, equipment identifier which identifies the receiving terminal owned by an individual user.

FIG. 29 shows an example of usage history information about e-books that users purchased at their receiving terminals 2301. This usage history information is sent from the receiving terminals 2301 to the digital content distribution apparatus 2300 and managed by the unit of receiving usage history information 2306 of the digital content distribution apparatus 2300.

In FIG. 29, reference numeral 2800 denotes column, equipment identifier under which the equipment identifiers of the receiving terminals at which purchase occurred are registered; 2801 denotes column, file name, under which the file names of e-book contents that the users purchased are registered; 2802 denotes column, purchase date at which the users who own the receiving terminals purchased the e-books; and 2803 denotes column, price of the e-books that the users purchased. Based on the equipment identifier 2800, the unit of receiving usage history information 2306 searches the list of user information shown in FIG. 28, managed by the unit of user information management 2305 and retrieves the information for the user associated withequipment identifier from the list. The billing unit 2307 bills the user, using the credit card number of the user included in the retrieved user information. In the example of FIG. 29, the list includes entry of purchase that the user of the receiving terminal with an equipment identifier of MAC-1 purchased a "File-9" e-book priced at ¥400. According to the user information example of FIG. 28, the user of the receiving terminal with the MAC-1 equipment identifier is known as "USER 1" Taro Matsushita and a billing that charges Taro Matsushita ¥400 is created, using his credit card number, 1111-2222-33.

FIG. 30 shows an example of content download and stock data about digital content volumes downloaded and stocked in the storage medium included in the receiving terminal 2301. This content download and stock data is managed by the unit of download and stock management 2304 of the digital content distribution apparatus 2300. The columns (2900 to 2906) of the content download and stock data list of FIG. 30 correspond to the columns explained in Embodiment 1, using FIG. 8, and their explanation is not repeated here.

In the example of FIG. 30, the capacity of the provider area of storage in the receiving terminal with the MAC-1 equipment identifier is 2G bytes and space of 5M bytes is now available. In other words, space of 1, 995M bytes is filled with the guide catalog and e-books stocked. Also, the list gives the following information. Next time the receiving terminal 2301 with the MAC-1 equipment identifier becomes online with the digital content distribution apparatus 2300, e-books of item numbers 1, 3, 5, 6, and 7 will be removed from the receiving terminal and e-books of item numbers 15 to 20 will be newly downloaded and stocked.

FIG. 31 shows an automatic download request command which is transmitted from a receiving terminal 2301 to the digital content distribution apparatus 2300 when the receiving terminal 2301 becomes online with the digital content distribution apparatus 2300. In FIG. 31, command "automatic download request" is specified in a command name field 3000, the equipment identifier of the receiving terminal is specified in an equipment identifier field 3001, and information about data formats in which the receiving terminal can display content on the display unit 2316 is specified in a data format field 3002. In the example of FIG. 31, the receiving terminal with the MAC-1 equipment identifier can display content in TEXT, HTML, and JPG formats. When the digital content distribution apparatus 2300 receives this automatic download request command, the apparatus activates the foregoing automatic download function 1) to determine digital content to download to the receiving terminal, based on the equipment identifier 3001. Moreover, if the digital content determined to download does not conform to the data formats specified in the data format field 3002, the apparatus converts the content into format acceptable for display on the terminal and downloads it.

FIG. 32 shows an example of usage history information about digital content that the user purchased, which is generated by the unit of generating usage history information 2317 of the receiving terminal 2301 and retained in the storage block for usage history information 2318.

In FIG. 32, reference numeral 3100 denotes column, file name of e-book content purchasedby the user; 3101 denotes column, purchase date at which the user purchased the e-book content identified by the file name specified in the file name column 3100; and 3102 denotes column, price of the e-book content.

FIG. 33 shows an example of a transmit usage history command which is used for the receiving terminal 2301 to transmit the usage history information shown in FIG. 32 to the digital content distribution apparatus 2300 when the receiving terminal 2301 becomes online with the digital content distribution apparatus 2300.

In FIG. 33, command "transmit usage history" is specified in a command name filed 3200, the equipment identifier of the receiving terminal is specified in a equipment identifier field 3201, and the number of e-book content items purchased by the user is specified in a purchase quantity field 3202, the number being equal to the number of e-book content items managed in the usage history information list shown in FIG. 32. In data fields 3203, the file name of the e-book purchased by the user, purchase date, and price are set in order, based on the usage history information shown in FIG. 32.

FIG. 34 shows a display screen of the guide catalog of e-books displayed on the display unit 2316 of the receiving terminal 2301. This screen is initially displayed when the user starts up the receiving terminal 2301. When the terminal starts up, the display unit 2316 automatically reads the catalog file from the directory 2506 for managing the guide catalog, shown in FIG. 26, and shows the catalog.

In FIG. 34, reference numeral 3300 denotes the display of the receiving terminal 2301; 3301 denotes a guide catalog display area; and 3302 denotes an e-book list rendering area where e-books available on the terminal are shown such that the e-book titles labeled on the spine are arranged as explained for FIG. 3 in Embodiment 1. Reference numeral 3303 denotes a user e-bookshelf button. When this button is clicked, the display changes to a display screen for a list of e-books purchased by the user. Reference numeral 3304 denotes a message button which blinks when a message to be presented to the user exits. When the user clicks on this button, the message is displayed. Reference numeral 3305 denotes a purchase button which should be clicked to purchase an e-book that the user selected from the e-books presented in the area 3302.

FIG. 35 shows a purchase confirmation dialog box which is displayed when the user clicks on the purchase button 3305 on the guide catalog display screen shown in FIG. 34, if the user-selected e-book is stocked in the receiving terminal 2301. In this dialog box, the title 3401, author name 3402, price 3403, and "summary" 3404 of the e-book selected for purchase are shown. When the user clicks on a purchase confirmation button 3405, a final purchase procedure is completed. Clicking on a cancel button 3406 cancels the purchase procedure and the user can return to the guide catalog display screen shown in FIG. 34.

FIG. 36 shows a screen in which a list of e-books purchased by the user is displayed. The basic makeup of this screen is the same as the guide catalog display screen shown in FIG. 34. The difference is that e-books for which the user completed the purchase procedure and which have already been the user' s own goods are listed in the rendering area 3501 of this screen. When the user selects an e-book that the user wants to read from among the e-books listed in the rendering area 3501 and clicks on a read button 3502, the user can begin reading of the selected e-book. By clicking on a catalog button 3503, the user can return to the guide catalog display screen shown in FIG. 34.

FIG. 37 shows a purchase booking dialog box which is displayed if an e-book selected by the user is not stocked in the receiving terminal 2301 when the user clicks on the purchase button 3305 on the guide catalog display screen shown in FIG. 34. The basic makeup of this dialogbox is the same as the purchase confirmation dialog box shown in FIG. 35, except that a message 3600 prompting the user to make booking the content to receive from the digital content distribution apparatus 2300 is displayed because the e-book does not exist on the receiving terminal 2301. By clicking on a purchase booking button 3601, the user can book the user-desired e-book to receive from the digital content distribution apparatus 2300 when the receiving terminal 2301 is online with digital content distribution apparatus 2300. Clicking on a cancel button 3602 cancels the booking the content to receive and the user can return to the guide catalog display screen shown in FIG. 34.

FIG. 38 shows a download complete message box which is displayed when the receiving terminal 2301 receives an e-book for which purchase booking was performed, using the dialog box shown in FIG. 37, from the digital content distribution apparatus 2300 to inform the user of the e-book reception. This message box 3700 is superimposed on the guide catalog display screen shown in FIG. 34. When the receiving terminal 2301 receives the e-book for which purchase booking was performed by the user from the digital content distribution apparatus 2300, themessage button 3701 blinks. When the user clicks on the message button 3701, the download complete message box 3700 is displayed. If the user wants to purchase the e-book immediately and begin reading it, the user should click on a Yes button 3702, then the user can go to the purchase confirmation dialog box shown in FIG. 35. If not, the user should click on a No button 3703, so the user can make the message 3700 disappear.

FIG. 39 shows a service disable message box which is displayed if the usage history maintained in the storage block for usage history information 2318 has not been sent to the digital content distribution apparatus 2300 after an elapse of a predetermined period after the user submitted the purchase of an e-book. In the example of FIG. 39, this message box is superimposed on the guide catalog display screen shown in FIG. 34. However, upon the elapse of a predetermined period after the submission of purchase, the service disable message 3800 is immediately superimposed on any screen being displayed, one of the examples shown in FIGS. 34 through 38. This message continues to appear until transmitting of the usage history to the digital content distribution apparatus 2300 is done and the receiving terminal 2301 does not accept any operation by the user while this message is displayed.

FIG. 40 is a flowchart describing a procedure in which the unit of determining digital content to download 2303 of the digital content distribution apparatus 2300 lists e-books due to be downloaded and stocked in the receiving terminal 2301 (in the column 2906 in FIG. 30) and e-books due to be removed from the receiving terminal 2301 (in the column 2905 in FIG. 30) in the digital content distribution system of the present invention and this operation will be explained below by following this flowchart in conjunction with FIGS. 24 through 33. In the following description, by way of example, the procedure is performed to list e-books due to be downloaded and stocked in and e-books due to be removed from the receiving terminal 2301 with the MAC-1 equipment identifier.

The following procedure is executed when new e-books are published and their management information is added to the digital content management information shown in FIG. 27 or on a periodic basis.
Step 0) The procedure starts (3900 in FIG. 40).
Step 1) The item numbers of e-books published after the last download date 2901 in FIG. 30 are set for the entry of e-books due to be downloaded and stocked (in the column 2906 in FIG. 30). Meanwhile, the entry of e-books due to be removed (in the column 2905 in FIG. 30) is cleared to "zero" (null entry) (3901 in FIG. 40). According to the content download and stock data shown in FIG. 30, the last download date for the terminal with the MAC-1 equipment identifier is "2002-6-9" and, thus, the item numbers 15 to 20 of the e-books, according to the digital content management information shown in FIG. 27, are set for the entry of e-books due to be downloaded and stocked.
Step 2) A total size of all volumes of the e-books set for the entry of e-books due to be downloaded and stocked (in the column 2906 in FIG. 30) is assigned to variable X. A total size of all volumes of the e-books set for the entry of e-books due to be removed (= 0) (in the column 2905 in FIG. 30) is assigned to variable Y (3902 in FIG. 40). According to the digital content management information shown in FIG. 27, the total size of the volumes of the e-books of item numbers 15 to 20 is 45M bytes and, thus, X = 45M bytes and Y = 0. According to the content download and stock data shown in FIG. 30, the space available currently for the receiving terminal with the MAC-1 equipment identifier is 5M bytes. Therefore, the storage space is not enough to store all the e-books set for the entry of e-books due to be downloaded and stocked. Accordingly, step 4) and subsequent should be executed to remove some of the e-books stocked in the receiving terminal and provide sufficient space to store the new e-books.
Step 3) From among the e-books stocked in the receiving terminal 2301, those of the oldest publication date are set as candidates to be removed and the count of search for candidates to be removed is initialized to 0 (3903 in FIG. 40). The e-books stocked in the receiving terminal 2301 is managed by the entry of e-books stocked 2904 in FIG. 30. In the example of FIG. 30, e-books of item numbers 1 to 14 are stocked in the receiving terminal with the MAC-1 equipment identifier. The count of search is used to determine whether to put the function of downloading content responsive to user preferences 2) into effect. If the count of search is 0, the e-books due to be removed (2905 in FIG. 30) are controlled not to include e-books of a particular "author name" or "genre" which is characteristic of user purchase tendency in order to have e-books of the same "author name" or "genre" as the e-books that the user has often purchased. If the count of search is 1, such control is not performed. When the count of search is greater than 1, it is impossible to stock all the e-books set for the entry of e-books due to be downloaded and stocked (2906 in FIG. 30), even if all the e-books stocked in the receiving terminal are removed.
Step 4) It is checked whether the space available + Y is more than X; that is, if all the e-books set for the entry of e-books due to be removed (2905 in FIG. 30) are removed from the receiving terminal, it is checked whether sufficient space can be provided to store all the e-books set for the entry of e-books due to be downloaded and stocked (2906 in FIG. 30). If sufficient space can be provided, the procedure proceeds to step 13) (3904 in FIG. 40).
Step 5) It is checked whether the count of search is greater than 1. If the count is greater than 1, the procedure proceeds to step 12) (3905 in FIG. 40).
Step 6) It is checked whether the count of search is 0. If the count is 0, downloading content responsive to user preferences is performed and the procedure proceeds to step 7). If the count is not 0, downloading content responsive to user preferences is not performed and the procedure proceeds to step 10) (3906 in FIG. 40).
Step 7) It is checked whether the "author name" or "genre" of an e-book set as a candidate to be removed is the same as the "author name" or "genre" of an e-book that the user purchased within past three months. If sameness is found, the procedure proceeds to step 8); if no sameness is found, the procedure proceeds t step 10 (3907 in FIG. 40).
Step 8) If the check of step 7) has been completed for all the e-books stocked in the receiving terminal, the procedure proceeds to step 11); if not, the procedure proceeds to step 9) (3908 in FIG. 40).
Step 9) Among the e-books stocked in the receiving terminal, those for which the check of step 7) has not been performed are set as candidates to be removed and the procedure returns to step 4) (3909 in FIG. 40). Through this step, the e-books stocked in the receiving terminal are set by gradual steps in order of old to new date of publication as candidates to be removed. In the example of the digital content management information shown in FIG. 27, item numbers 1 to 14 of the e-books should be set in order as candidates to be removed.
Step 10) The item numbers of the e-books set as candidates to be removed are added (3910 in FIG. 40) to the e-books due to be removed (2905 in FIG. 30). According to the usage history information shown in FIG. 29, the user of the terminal with the MAC-1 equipment identifier purchased a "File-9" e-book on January 30, 2002, and the genre of this e-book is "comics," according to the digital content management information in FIG. 27. Therefore, item numbers 1, 3, 5, 6, and 7 of e-books are set for the entry of e-books due to be removed (2905 in FIG. 30) and, by removing these e-books, space of 40Mbytes canbe provided. Because the space available currently (2903 in FIG. 30) is 5M bytes, it becomes possible to stock all e-books of item numbers 15 to 20 (45M bytes) set for the entry of e-books due to be downloaded and stocked (2906 in FIG. 30).
Step 11) The count of search is incremented by one and the procedure returns to step 3) (3911 in FIG. 40).
Step 12) This step is executed when it is impossible to provide sufficient space to store all the e-books set for the entry of e-books due to be downloaded and stocked (2906 in FIG. 30), even if all the e-books stocked in the receiving terminal are removed. Accordingly, the number of the e-books due to be downloaded and stocked (2906 in FIG. 30) is reduced to the e-books of volumes to fall within the capacity (2902 in FIG. 30) of the storage of the receiving terminal, wherein the e-books are set remaining in order of latest date of publication, thus having the e-books of new publication date stocked preferentially. Meanwhile, the e-books stocked (2904 in FIG. 30) are set for the e-books due to be removed, so that all the e-books currently stocked in the receiving terminal will be removed (3912 in FIG. 40).
Step 13) The procedure terminates (3913 in FIG. 40).

Through the above procedure, the e-books due to be downloaded and stocked (2906 in FIG. 30) in the receiving terminal and the e-books due to be removed (2905 in FIG. 30) from the receiving terminal are listed. This procedure is designed so that, among e-books managed by the digital content management unit 2302 of the digital content distribution apparatus 2300, those of later publication date can preferentially be downloaded and stocked in the receiving terminal 2301. This procedure is also designed to make the following control practicable: if sufficient storage space is not available on the receiving terminal, removing e-books of older publication date from the receiving terminal, while allowing e-books that are reckoned fit for individual user' s preference to be stocked in the terminal. After thus providing sufficient storage space, the e-books set for the entry due to be downloaded and stocked (2906 in FIG. 30) are stocked assuredly.

When the digital content distribution apparatus 2300 receives the automatic download request command shown in FIG. 31 from a receiving terminal 2301, the unit of determining digital content to download 2303 obtains the e-books due to be removed (2905 in FIG. 30) associated with the receiving terminal from the content download and stock data, based on the equipment identifier 3001 specified in the command, generates the removal instruction command shown in FIG. 13, according to the obtained e-books due tobe removed (2905 in FIG. 30), transmits this command to the receiving terminal 2301, and thereby can have the specified e-books removed from the receiving terminal 2301. According to the e-books due to be downloaded and stocked (2906 in FIG. 30) associated with the receiving terminal, the unit of determining digital content to download 2303 also generates the stock instruction command shown in FIG. 12, transmits this command to the receiving terminal 2301, and thereby can have the specified e-books downloaded and stocked in the receiving terminal 2301. After transmitting the removal instruction command (FIG. 13) to the receiving terminal 2301, the digital content distribution apparatus 2300 deletes the item numbers of the e-books set for the entry of e-books due to be removed (2905 in FIG. 30) for the receiving terminal from the e-books stocked (2904 in FIG. 30) associated with the receiving terminal. After transmitting the stock instruction command (FIG. 12) to the receiving terminal 2301, the digital content distribution apparatus 2300 adds the item numbers of the e-books set for the entry of e-books due to be downloaded and stocked (2906 in FIG. 30) for the receiving terminal to the e-books stocked (2904 in FIG. 30) associatedwith the receiving terminal. In this manner, the digital content distribution apparatus 2300 can manage the e-books stocked in the receiving terminal 2301.

FIG. 41 is a flowchart describing a procedure of purchase and purchase booking, which is performed on a receiving terminal 2301 in the digital content distribution system of the present invention and this operation will be explained below by following this flowchart in conjunction with FIGS. 24 through 39. This procedure starts when the user selects an e-book that the user wants to buy on the guide catalog display screen shown in FIG. 34 and clicks on the purchase button 3305.
Step 0) The procedure starts (4000 in FIG. 41).
Step 1) The display unit 2316 checks to see whether the e-book content selected by the user exists in the directory 2507 for managing e-books not purchased, shown in FIG. 26, the directory being managed on the storage 2315. If the e-book exists in this directory, the procedure proceeds to step 2) ; if the e-book does not exist in this directory, the procedure proceeds to step 5) (4001 in FIG. 41).
Step 2) The display unit 2316 displays the purchase confirmation dialog box shown in FIG. 35 (4002 in FIG. 41).
Step 3) When the user clicks on the confirmation button 3405 in the purchase confirmation dialog box shown in FIG. 35, the procedure proceeds to step 4). When the cancel button 3406 is clicked, the procedure proceeds to step 8) (4003 in FIG. 41).
Step 4) The unit of generating usage history information 2317 generates a usage history about the e-book for which the user placed a purchase order. The generated usage history is retained in the storage block for usage history information 2318. Moreover, the e-book of purchase order is copied from the directory 2507 for managing e-books not purchased to the directory 2509 for managing e-books purchased, shown in FIG. 26 (4004 in FIG. 41).
Step 5) The display unit 2316 displays the purchase booking dialog box shown in FIG. 37 (4005 in FIG. 41).
Step 6) When the user clicks on the purchase booking button 3601 in the purchase booking dialog box shown in FIG. 37, the procedure proceeds to step 7). When the cancel button 3602 is clicked, the procedure proceeds to step 8) (4006 in FIG. 41).
Step 7) The unit of booking content to receive 2314 registers content designation information for designating the e-book content for which the user placed a purchase order to the unit of content designation information management 2313 in order to receive the e-book content from the digital content distribution apparatus 2300 (4007 in FIG. 41).
Step 8) The procedure terminates (4008 in FIG. 41).

Through the above procedure, if the e-book for which the user placed a purchase order is stocked in the receiving terminal 2301, the user can immediately purchase the e-book and begin reading it, regardless of whether the receiving terminal is online or offline with the digital content distribution apparatus 2300. If the e-book for which the user placed a purchase order is not stocked in the receiving terminal 2301, when the receiving terminal becomes online with the digital content distribution apparatus 2300, transaction is performed so that the e-book of the purchase order will be downloaded from the digital content distribution apparatus 2300 to the receiving terminal 2301.

A concrete procedure of the transaction between the receiving terminal 2301 and the digital content distribution apparatus 2300 to receive e-book content from the digital content distribution apparatus 2300, using content designation information is the same as explained in Embodiment 2 and, therefore, its detailed explanation is not repeated here.

FIG. 42 is a flowchart describing a procedure of transmitting usage history information, which is performed on a receiving terminal 2301 in the digital content distribution system of the present invention. This operation will be explained below by following this flowchart in conjunction with FIGS. 24 and 33.
Step 0) The procedure starts (4100 in FIG. 42)
Step 1) The unit of monitoring communication conditions 2309 checks communication conditions in which the unit of service provision 2308 can communicate with the digital content distribution apparatus 2300. If communication is enabled, the procedure proceeds to step 2). During an offline, the terminal waits until becoming online with the distribution apparatus (4101 in FIG. 42).
Step 2) The unit of transmitting usage history information 2310 checks to see whether usage history information exists in the storage block for usage history information 2318. If this information exists, the procedure proceeds to step 3). If this information does not exist, the procedure returns to step 1) (4102 in FIG. 42).
Step 3) The unit of transmitting usage history information 2310 generates the transmit usage history command shown in FIG. 33, based on the usage history information, and transmits this command to the digital content distribution apparatus 2300 (4103 in FIG. 42).
Step 4) The unit of transmitting usage history information 2310 deletes the usage history transmitted to the digital content distribution apparatus 2300 from the storage block for usage history information 2318 and the procedure returns to step 1) (4104 in FIG. 42).

Through the above procedure, when the receiving terminal is online with the digital content distribution apparatus 2300, the unit of transmitting usage history information 2310 checks to see whether the storage block for usage history information 2318 retains usage history information and, if this information is retained, generates the transmit usage history command shown in FIG. 33, based on the usage history information, and automatically transmits this command to the digital content distribution apparatus 2300. On the other hand, the digital content distribution apparatus 2300 searches the user information list shown in FIG. 28, which is managed by the unit of user information management 2305, based on the equipment identifier 3201 specified in the transmit usage history command, thereby obtaining the user information associated with the equipment identifier. Using the credit card number included in the obtained user information, the billing unit 2307 creates a billing that charges the user for the price of the e-book purchased by the user.

FIG. 43 is a flowchart describing a procedure of making service enable/disable decision, which is performed on a receiving terminal 2301 in the digital content distribution system of the present invention. This operation will be explained below by following this flowchart in conjunction with FIGS. 32 and 39. The following procedure comprising steps 0) to 5) is repeated on a periodic basis.
Step 0) The procedure starts (4200 in FIG. 43).
Step 1) The unit of service enable/disable decision 2319 checks to see whether the storage block for usage history information 2318 retains usage history information. If this information is retained, the procedure proceeds to step 2); if not, the procedure proceeds to step 5) (4201 in FIG. 43).
Step 2) It is checked whether, at the present time, one week has elapsed after the purchase date (3101 in FIG. 32) described in the usage history. If one week has elapsed, the procedure proceeds to step 3); if not, the procedure proceeds to step 5) (4202 in FIG. 43).
Step 3) The unit of service enable/disable decision 2319 generates the service disable message 3800 shown in FIG. 39 and the display unit 2316 displays this message (4203 in FIG. 43).
Step 4) The unit of service enable/disable decision 2319 instructs the display unit 2316 not to accept user operation. The display unit 2316 disables user operation and the procedure proceeds to step 8) (4204 in FIG. 43).
Step 5) The unit of service enable/disable decision 2319 checks to see whether the display unit 2316 is displaying the service disable message 3800 shown in FIG. 39. If the display unit is displaying this message, the procedure proceeds to step 6) ; if not, the procedure proceeds to step 8) (4205 in FIG. 43).
Step 6) The unit of service enable/disable decision 2319 instructs the display unit 2316 to stop displaying the service disable message 3800 shown in FIG. 39 and the display unit 2316 stops displaying this message (4206 in FIG. 43).
Step 7) The unit of service enable/disable decision 2319 instructs the display unit 2316 to accept user operation. The display unit 2316 enables user operation (4207 in FIG. 43).
Step 8) The procedure terminates (4208 in FIG. 43).

Through the above procedure, if usage history information about an e-book that the user purchased has not been sent to the digital content distribution apparatus 2300 after an elapse of a predetermined period after the purchase and, consequently, the billing unit 2307 of the digital content distribution apparatus 2300 cannot execute billing to the user, the receiving terminal 2301 can be put unserviceable until transmitting of the usage history to the digital content distribution apparatus 2300 is done. The procedure includes presenting the service disable message shown in FIG. 39 to the user and this message canprompt the user to transmit the usage history. This procedure can avoid a possible problem that a user continues to enjoy an e-book without paying the charge for the e-book to the provider that runs the digital content distribution apparatus 2300. By displaying the message prompting the user to transmit the usage history, the provider can exercise their legitimate right of collecting the charge for the content that they supplied from the user.

As described above, according to the digital content distribution system of the present invention, the foregoing automatic download function 1) enables the following: when the user-side receiving terminal 2301 is online with the distribution apparatus, the distribution apparatus automatically downloads the guide catalog of content items to sell and part of the content items to the receiving terminal, which are then stocked in the receiving terminal 2301; and downloads can be controlled to have later content items stocked preferentially in the receiving terminal, according to the space available on the storage medium included in the receiving terminal 2301. The foregoing function of downloading content responsive to user preferences 2) enables the following: content items reckoned fit for an individual user's preference are stocked preferentially in the user's receiving terminal. The foregoing purchase function 3) enables the following: content items to sell, once stocked in the receiving terminal 2301, can be sold to the user any time, regardless of whether the terminal is online or offline with the digital content distribution apparatus 2300. The foregoing purchase booking and download function 4) enables the following: if a content item to sell that the user placed a purchase order does not exist on the receiving terminal 2301, the content item of the purchase order can be booked to be automatically received when the receiving terminal 2301 becomes online with the digital content distribution apparatus 2300. The foregoing transmitting usage history information and billing function 5) implements the following: usage history information about the content item purchased by the user is automatically sent from the receiving terminal 2301 to the digital content distribution apparatus 2300 when the receiving terminal 2301 is online with the digital content distribution apparatus 2300 and, on the digital content distribution apparatus 2300, a billing to the user is created, based on the usage history that the distribution apparatus receives from the user's terminal. The foregoing service enable/disable decision function 6) can avoid a possible problem that a user continues to enjoy an e-book without paying the charge for the e-book to the provider that runs the digital content distribution apparatus 2300. By displaying the message prompting the user to transmit the usage history, the provider can exercise their legitimate right of collecting the charge for the content that they supplied from the user.

### (Fourth embodiment)

FIG. 44 is a diagram showing a further example of configuration of a digital content distribution system according to the present invention. In FIG. 44, reference numeral 4300 denotes a digital content distribution apparatus for distributing digital content; 4301 denotes an information terminal which receives digital content distributed from the distribution apparatus and stores the digital content onto a portable storage medium 4302, wherein the information terminal is one of the information terminals connectable to the digital content distribution apparatus; 4302 denotes a portable storage medium which should be mounted on an information terminal 4301 or a receiving terminal 4303 and used to retain digital content distributed from the digital content distribution apparatus 4300; 4303 denotes a receiving terminal which receives digital content distributed from the digital content distribution apparatus 4300, stores the digital content onto the storage medium 4302, and uses the digital content retrieved from the storage medium 4302, wherein the receiving terminal is one of the receiving terminals connectable to the digital content distribution apparatus; 4304 denotes a digital content management unit which manages digital content items; 4305 denotes a unit of determining digital content to download which receives from an information terminal 4301 medium identifier data uniquely assigned to the storage medium 4302 that is now mounted on the information terminal, determines digital content to download to the information terminal, based on the received medium identifier data, and downloads the digital content to the information terminal; 4306 denotes a unit of download and stock management which manages content download and stock data about digital content volumes downloaded and stocked in individual storage media 4302 on different terminals; 4307 denotes a unit of user information management which manages user information about individual users who use individual storage media 4302 associated with the medium identifiers; 4308 denotes a unit of usage history information management which manages usage history information about digital content purchased at the receiving terminals 4303, retrieved from the individual storage media 4302; 4309 denotes a billing unit which identifies a user, based on the foregoing medium identifier data and user information received from the information terminals 4301 or receiving terminals 4301, and bills the thus identified user, according to the foregoing usage history information; 4310 denotes a unit of service provision which sends the medium identifier data of the storage medium 4302 to the digital content distribution apparatus 4300 when the storage medium 4302 is set in place on the information terminal 4301, receives digital content distributedfrom thedigital content distribution apparatus 4300, and stores the digital content onto the storage medium 4302; 4311 denotes a unit of detecting content designation information which checks to see whether content designation information that is used to receive designated content from the digital content distribution apparatus 4300 has been stored on the storage medium 4302 and reads the content designation information; 4312 denotes a connect unit in which a storage medium 4302 should be mounted; 4313 denotes a unit of detecting usage history information which checks to see whether usage history information about digital content purchased by the user has been stored on the storage medium 4302 and reads the usage history information; 4314 denotes a unit of transmitting usage history information which transmits the usage history information detected and retrieved by the unit of detecting usage history information 4313 to the digital content distribution apparatus 4300; 4315 denotes a unit of medium identifier data management which retains medium identifier data uniquely assigned to the storage medium 4302; 4316 denotes a storage block for data format information for storing information about data formats in which the receiving terminal 4303 can display content; 4317 denotes a unit of content designation information management which manages the foregoing content management information; 4318 denotes storage for storing digital content and related data that an information terminal 4301 or receiving terminal 4303 receives from the digital content distribution apparatus 4300; 4319 denotes a storage block for usage history information for storing the foregoing usage history information; 4320 denotes a connect unit in which a storage medium 4302 should be mounted; 4321 denotes a unit of service provision which sends the medium identifier data to the digital content distribution apparatus 4300 when communication is enabled between the digital content distribution apparatus 4300 and the receiving terminal 4303 and receives digital content distributed from the digital content distribution apparatus 4300; 4322 denotes a unit of monitoring communication conditions which monitors the conditions of communication between the receiving terminal 4303 and the digital content distribution apparatus 4300; 4323 denotes a unit of booking content to receive which stores content designation information that is used to receive designated content from the digital content distribution apparatus 4300 onto the storage medium 4302; 4324 denotes a display unit which displays digital content retrieved from the storage medium 4302; 4325 denotes a unit of generating usage history information which generates the foregoing usage history information and stores this information onto the storage medium 4302; 4326 denotes a unit of transmitting usage history information which transmits the foregoing usage history information retrieved from the storage medium 4302 to the digital content distribution apparatus 4300 when communication is enabled between the digital content distribution apparatus 4300 and the receiving terminal 4303; and 4327 denotes a unit of service enable/disable decision which checks to see that the foregoing usage history information has been sent to the digital content distribution apparatus 4300 within a predetermined period after the user submits the purchase of a digital content item and stops the service of the receiving terminal 4303 if that information has not been sent.

To explain the features of the digital content distribution system according to the fourth preferred embodiment of the present invention, difference in constitution from the digital content distribution system of the third embodiment will first be described.

First, the storage block for data format information 2312, unit of content designation information management2313,storage 2315, and storage block for usage history information 2318 of the receiving terminal (2301 in FIG. 24), which have been described for Embodiment 3, are embodied on the portable storage medium 4302 in the case of Embodiment 4.

Second, the equipment identifier data for each individual receiving terminal 2301, described in Embodiment 3, is not used; instead, medium identifier data uniquely assigned each individual storage medium 4302 is used in Embodiment 4. The medium identifier data is managed by the unit of medium identifier data management 4315 included on the storage medium 4302.

Third, the digital distribution system configuration of Embodiment 4 additionally includes an information terminal 4301 on which a storage medium 4 302 should be mounted and which receives digital content from the digital content distribution apparatus on behalf of a receiving terminal 4303.

Content download and management that are implemented by use of equipment identifier data in the digital content distribution system described in Embodiment 3 can be implemented in all the same way by use of medium identifier data. The management constitution for digital content and other data shown in FIG. 26 can be built on the storage medium 4302. The configurations of the digital content distribution apparatus 4300 and the receiving terminal 4303 in the digital content distribution system of Embodiment 4 are the same as those of the digital content distribution apparatus 2300 and the receiving terminal 2301 in the digital content distribution system of Embodiment 3. Therefore, the functions, 1) automatic download, 2) downloading content responsive to user preferences, 3) purchase, 4) purchase booking and download, 5) transmitting usage history information and billing, and 6) service enable/disable decision, which are implemented by the digital content distribution system of Embodiment 3, can be implemented in the same way by the digital content distribution system of Embodiment 4. Thus, the detailed descriptions of transactions between the digital content distribution apparatus 4300 and the receiving terminal 4303 are not repeated. In the following, functions that can be implemented by the information terminal 4301 in the digital content distribution system of Embodiment 4 and processing and operation procedures for implementing the functions will be described. In the following description, reference to FIGS. 2 through 43 which have been used in describing the digital content distribution systems of Embodiments 1 to 3 will be made, when appropriate.

First, the system functions that are implemented by the information terminal 4301 will be described below.

### 1) Automatic receiving function

When the user mounts a storage medium 4302 on an information terminal 4301, the information terminal 4301 reads medium identifier data and data format information from the medium, generates the automatic download request command shown in FIG. 31, and transmits this command to the digital content distribution apparatus 4300 (in this embodiment, the medium identifier is set, instead of equipment identifier, in the equipment ID field of this command as shown in FIG. 31). Digital content and related data are stored onto or removed from the storage medium 2702 by the catalog update command shown in FIG. 11, stock instruction command shown in FIG. 12, and removal instruction command shown in FIG. 13 sent back from the digital content distribution apparatus.

The digital content distribution apparatus 4300 performs automatic download in the same manner as the digital content distribution apparatus 2300 does as described in Embodiment 3. The only difference is that the digital content distribution apparatus 4300manages several types of information, usingmedium identifier data instead of equipment identifier data. Thus, the procedure that is performed by the digital content distribution apparatus 4300 is the same as described in Embodiment 3; however, medium identifier data should replace equipment identifier data in the foregoing descriptions of this procedure.

### 2) Booking and download function

When the user mounts a storage medium 4302 on an information terminal 4301, the information terminal 4301 checks to see whether content designation information has been stored on it, if this information has been stored, generates the designated content download request command shown in FIG. 21, based on the content designation information, and transmits this command to the digital content distribution apparatus 4300. The information terminal receives digital content downloaded with the stock instruction command shown in FIG. 12 from the digital content distribution apparatus 4300 and stores the digital content onto the storage medium 4302.

### 3) Purchase log transmitting function

When the user mounts a storage medium 4302 on an information terminal 4301, the information terminal 4301 checks to see whether usage history information has been stored on it and, if this information has been stored, transmits this information to the digital content distribution apparatus 4300.

Also, the digital content distribution apparatus 4300 performs billing in the same manner as the digital content distribution apparatus 2300 does as described in Embodiment 3. The only difference is that the digital content distribution apparatus 4300 manages several types of information, usingmedium identifier data instead of equipment identifier data. Thus, the billing-related procedure that is performed by the digital content distribution apparatus 4300 is the same as described in Embodiment 3; however, medium identifier data should replace equipment identifier data in the foregoing descriptions of this procedure.

FIG. 45 is a flowchart describing a procedure for implementing the automatic receiving function on an information terminal 4301 in the digital content distribution system of the present invention. This operation will be described below.
Step 0) The procedure starts (4400 in FIG. 45)
Step 1) When the connect unit 4312 detects a storage medium 4302 mounted in it, the procedure proceeds to step 2) While the connect unit does not detect the medium, the information terminal stands idle until a storage medium is mounted (4401 in FIG. 45)
Step 2) The unit of service provision 4310 generates the automatic download request command shown in FIG. 31, using medium identifier data retained on the unit of medium identifier data management 4315, and transmits this command to the digital content distribution apparatus 4300 (in this embodiment, the medium identifier is set, instead of equipment identifier, in the equipment ID field of this command as shown in FIG. 31) (4402 in FIG. 45).
Step 3) According to the removal instruction command (FIG. 13) received from the digital content distribution apparatus 4300, the unit of service provision 4310 removes the files of e-book contents specified in the fields 1202 of this command, as shown in FIG. 13, out of the files of e-book contents stocked in the storage 4318 (4403 in FIG. 45).
Step 4) According to the stock instruction command (FIG. 12) received from the digital content distribution apparatus 4300, the unit of service provision 4310 additionally stores the files of e-book contents specified in the fields 1102 of this command, as shown in FIG. 12, into the storage 4318 (4404 in FIG. 45).
Step 5) According to the catalog update command (FIG. 11) received from the digital content distribution apparatus 4300, the unit of service provision 4310 stores the specified catalog file into the storage 4318. If the catalog file with the same name already exists, the previously stored data file is removed and then the specified catalog file is stored (4405 in FIG. 45). Step 6) The procedure terminates (4406 in FIG. 45).

Through the above procedure, when the user mounts a storage medium 4302 on the information terminal 4301, the information terminal 4301 generates the automatic download request command shown in FIG. 31 from the medium identifier data uniquely assigned to the storage medium 4302 and data format information about data formats in which the user's receiving terminal 4303 can display content, and transmits this command to the digital content distribution apparatus 4300. In consequence, by the commands, shown respectively in FIGS. 10 to 13, returned from the digital content distribution apparatus 4300, the information terminal 4301 can remove the specified digital contents from the storage medium 4302 mounted on it or additionally store new contents onto the medium.

The procedure in which the digital content distribution apparatus 4300 downloads digital content in response to the automatic download request command shown in FIG. 31 received from the information terminal 4301 is the same as the procedure of FIG. 40 described in Embodiment 3 and, therefore, its detailed explanation is not repeated.

FIG. 46 is a flowchart describing a procedure for receiving digital content, based on content designation information shown in FIG. 20, which is performed on an information terminal 4302 in the digital content distribution system of the present invention, and this operation will be explained below by following this flowchart in conjunction with FIGS. 8, 12, 13, and 9 through 21.
Step 0) The procedure starts (4500 in FIG. 46).
Step 1) When the connect unit 4312 detects a storage medium 4302 mounted in it, the procedure proceeds to step 2) While the connect unit does not detect the medium, the information terminal stands idle until a storage medium is mounted (4501 in FIG. 46)
Step 2) The unit of detecting content designation information 4311 checks the unit of content designation information management 4317 to see whether there is content designation information retained. If the content designation information is retained, the procedure proceeds to step 3); if not, the procedure proceeds to step 8) (4502 in FIG. 46).
Step 3) The designated content download request command shown in FIG. 21 is generated from the content designation information (FIG. 20) retained on the unit of content designation information management 4317 and the medium identifier data retained on the unit of medium identifier data management 4315 and transmitted to the digital content distribution apparatus 4300 (in this embodiment, the medium identifier is set, instead of equipment identifier, in the equipment ID field of this command as shown in FIG. 21) (4503 in FIG. 46).
Step 4) According to the removal instruction command ( FIG. 13) received from the digital content distribution apparatus 4300, the unit of service provision 4310 removes the files of e-book contents specified in the fields 1202 of this command, as shown in FIG. 13, out of the files of e-book contents stocked in the storage 4318 (4504 in FIG. 46). If sufficient space to store the files of e-book contents specified in the fields 2003 of the designated content download request command, as shown in FIG. 21, does not exist on the storage medium 4302, this removal instruction command is transmitted from the digital content distribution apparatus 4300 in order to provide sufficient space by having e-book contents of old publication date removed.
Step 5) According to the stock instruction command (FIG. 12) received from the digital content distribution apparatus 4300, the unit of service provision 4310 additionally stores the files of e-book contents specified in the fields 1102 of this command, as shown in FIG. 12, into the storage 4318 (4505 in FIG. 46). The files of e-book contents specified in the fields 2003 of the designated content download request command, as shown in FIG. 21, are set in the data fields of this stock instruction command.
Step 6) Because of the completion of receiving the user-desired e-book contents, using the content designation information, the content designation information is deleted from the unit of content designation information management 4317 (4506 in FIG. 46).
Step 7) The procedure terminates (4508 in FIG. 46).

Through the above procedure, when the user mounts a storage medium 4302 on the information terminal 4301, the information terminal 4301 checks whether the unit of content designation information management 4317 retains content designation information, if the content designation information is retained, requests the digital content distribution apparatus 4300 to download user-desired contents, using this content designation information, and can receive the contents from the digital content distribution apparatus 4300.

The procedure in which the digital content distribution apparatus 4300 downloads digital content in response to the designated content download request command shown in FIG. 21 received from the information terminal 4301 is the same as the procedure of FIG. 23 described in Embodiment 2 and, therefore, its detailed explanation is not repeated.

FIG. 47 is a flowchart describing a procedure for transmitting usage history information, which is performed on an information terminal 4301 in the digital content distribution system of the present invention. This operation will be explained below by following this flowchart in conjunction with FIGS. 33 and 44.
Step 0) The procedure starts (4600 in FIG. 47)
Step 1) When the connect unit 4312 detects a storage medium 4302 mounted in it, the procedure proceeds to step 2) While the connect unit does not do this detection, the information terminal stands idle until a storage medium is mounted (4601 in FIG. 47)
Step 2) The unit of detecting usage history information 4313 checks whether usage history information exists on the storage block for usage history information 4319. If this information exists, the procedure proceeds to step 3) ; if this information does not exist, the procedure proceeds to step 5) (4602 in FIG. 47).
Step 3) The unit of transmitting usage history information 4314 generates the transmit usage history command shown in FIG. 33, based on the usage history information, and transmits this command to the digital content distribution apparatus 4300 (in this embodiment, the medium identifier is set, instead of equipment identifier, in the equipment ID field of this command as shown in FIG. 33) (4603 in FIG. 47).
Step 4) The unit of transmitting usage history information 4314 deletes the usage history information which has now been transmitted to the digital content distribution apparatus 4300 from the storage block for usage history information 4319 (4604 in FIG. 47).
Step 5) The procedure terminates (4605 in FIG. 47).

Through the above procedure, when the information terminal is online with the digital content distribution apparatus 4300, the unit of transmitting usage history information 4314 checks whether usage history information exists on the storage block for usage history information 4319, if this information exists, generates the transmit usage history command shown in FIG. 33, based on the usage history information, and automatically transmits this command to the digital content distribution apparatus 4300 (in this embodiment, the medium identifier is set, instead of equipment identifier, in the equipment ID field of this command as shown in FIG. 33). On the other hand, the digital content distribution apparatus 4300 searches the user information list managed by the unit of user information management 4307, based on the medium identifier specified in the transmit usage history command, thereby obtaining the user information associated with the medium identifier. Using the credit card number included in the obtained user information, the billing unit 4309 creates a billing that charges the user for the price of the e-book purchased by the user.

As described above, according to the digital content distribution system of the present embodiment of the invention, through the use of a storage medium 4302 which is mounted on either a receiving terminal 4303 or information terminal 4301, if appropriate, the foregoing functions, 1) automatic receiving, 2) usage history transmitting, and 3) booking and download can be implemented on the information terminal 4301, in addition to the functions implemented by the digital content distribution system described in Embodiment 1. In this embodiment, suppose the following: for example, a user has a receiving terminal 4303 which communicates with the digital content distribution apparatus 4300 by wireless communication and is now in an area where the receiving terminal 4303 cannot directly communicate with the digital content distribution apparatus 4300 and finds an information terminal 4301 that is assumed installed in a station building or on a street corner. In this situation, the user can communicate with the digital content distribution apparatus 4300 indirectly through the use of the information terminal 4301 and can continue to get the e-book distribution service described in Embodiment 3.

### (Fifth embodiment)

FIG. 48 is a diagram showing a still further example of configuration of a digital content distributionsystem according to the present invention. In FIG. 48, reference numeral 4700 denotes a digital content distribution apparatus for distributing digital content; 4701 denotes an information terminal which receives digital content distributed from the digital content distribution apparatus 4700, wherein the information terminal is one of the information terminals connectable to the digital content distribution apparatus; 4702 denotes a receiving terminal which can receive digital content from the digital content distribution apparatus 4700 either in direct mode of communication with the digital content distribution apparatus 4700 or indirect mode of communication via the information terminal 4701 which provides a higher-rate channel; 4703 denotes a digital content management unit which manages digital content items; 4704 denotes a unit of determining digital content to download which receives from an information terminal 4701 or a receiving terminal 4702 equipment identifier data uniquely assigned to the receiving terminal 4702, determines digital content to download to the receiving terminal, based on the received equipment identifier data, and downloads the digital content to the terminal; 4705 denotes a unit of download and stock management which manages content download and stock data about digital content volumes downloaded and stocked in individual receiving terminals 4702; 4706 denotes a unit of user information management which manages user information about individual users who use the individual receiving terminals 4702 associated with the equipment identifiers; 4707 denotes a unit of usage history information management which manages usage history information about digital content purchased at the receiving terminals 4702; 4708 denotes a billing unit which identifies a user, based on the foregoing equipment identifier data and user information received from the receiving terminals 4702, and bills the thus identified user, according to the foregoing usage history information; 4709 denotes a unit of service provision which receives digital content from the digital content distribution apparatus 4700 on behalf of the receiving terminal 4702; 4710 denotes a unit of monitoring communication conditions which monitors the conditions of communication between the information terminal 4701 and the digital content distribution apparatus 4700; 4711 denotes a unit of transmitting usage history information which transmits usage history information about digital content purchased at a receiving terminal 4702 on behalf of the receiving terminal 4702; 4712 denotes a unit of communication control which a request for performing data transmission/reception and a query about communication conditions from a receiving terminal 4702; 4713 denotes a unit of service provision which sends the equipment identifier data to the digital content distribution apparatus 4700 and receives digital content distributed from the digital content distribution apparatus 4700 when communication is enabled between the digital content distribution apparatus 4700 and the receiving terminal 4702; 4714 denotes a unit of monitoring communication conditions which monitors the conditions of communication between the receiving terminal 4702 and the digital content distribution apparatus 4700; 4715 denotes a unit of transmitting usage history information which transmits the foregoing usage history information to the digital content distribution apparatus 4700 when communication is enabled between the digital content distribution apparatus 4700 and the receiving terminal 4702; 4716 denotes a unit of equipment identifier data management which retains the foregoing equipment identifier data; 4717 denotes a storage block for data format information for storing information about data formats in which the receiving terminal 4702 can display content; 4718 denotes a unit of content designation information management which manages content management information that is used to receive designated data from the digital content distribution apparatus 4700 when communication is enabled between the digital content distribution apparatus 4700 and the receiving terminal 4702; 4719 denotes a unit of booking content to receive which registers the foregoing content designation information; 4720 denotes storage for storing digital content and related data received from the digital content distribution apparatus 4700; 4721 denotes a display unit which displays digital content retrieved from the storage 4720; 4722 denotes a unit of generating usage history information which generates the foregoing usage history information; 4723 denotes a storage block for usage history information for storing the foregoing usage history information; 4724 denotes a unit of service enable/disable decision which checks to see that the foregoing usage history information has been sent to the digital content distribution apparatus 4700 within a predetermined period after the user submits the purchase of a digital content item and stops the service of the receiving terminal 4702 if that information has not been sent; and 4725 denotes a unit of communication control which performs a control process for data transmission/reception, the process comprising obtaining communication conditions between the information terminal 4701 and the digital content distribution apparatus 4700 by sending a query about such conditions to the information terminal 4701, comparing the above conditions with the conditions of communication between the receiving terminal 4702 and the digital content distribution apparatus 4700; and selecting either direct mode of communication with the digital content distribution apparatus 4700 or indirect mode of communication via the information terminal 4701 which provides a higher-rate channel for receiving digital content from the digital content distribution apparatus 4700.

To explain the features of the digital content distribution system according to a preferred Embodiment 5 of the present invention, the difference in constitution from the digital content distribution system of the third embodiment will first be described.

First, the receiving terminal 4702 in the digital content distribution system of Embodiment 5 is configured by adding the unit of communication control 4725 to the receiving terminal (2301 in FIG. 24) described in Embodiment 3.

Second, in Embodiment 5, the information terminal 4702 is added to the digital content distribution system configuration to perform data transmission and reception to/from the digital content distribution apparatus 4700 on behalf of the receiving terminal 4702.

The configuration of the receiving terminal 4702 in the digital content distribution system of Embodiment 5 is essentially the same as the receiving terminal 2301 in the digital content distribution system of Embodiment 3, except that the unit of communication control 4725 is added. The digital content distribution apparatus 4700 in the digital content distribution system of Embodiment 5 operates the same as the corresponding apparatus in other embodiments, except that the apparatus downloads digital content to not only the receiving terminal 4702, but also the information terminal 4701. Therefore, the functions, 1) automatic download, 2) downloading content responsive to user preferences, 3) purchase, 4) purchase booking and download, 5) transmitting usage history information and billing, and 6) service enable/disable decision, which have been described for the digital content distribution system of Embodiment 3, can be implemented equally by the digital content distribution apparatus 4700 and the receiving terminal 4702 in the digital content distribution system of Embodiment 5. Thus, the detailed descriptions of the procedures for implementing the foregoing functions 1) to 5) which are implemented by the digital content distribution apparatus 4700 and the receiving terminal 4702 are not repeated. In the following, additional functions in the digital content distribution system of Embodiment 5 and processing and operation procedures thereof will be described.

A noticeable function added to the digital content distribution system of Embodiment 5 is a control function for allowing the receiving terminal 4702 to select either direct mode of communication with the digital content distribution apparatus 4700 or indirect mode of communication via the information terminal 4701 which provides a higher-rate channel for data transmission/reception. By this function implementation, when a plurality of devices are interconnected, digital contents can be received by a device having highest-rate communication means from the digital content distribution apparatus 4700.

FIG. 49 is a flowchart describing a procedure for selecting communication means, which is performed on a receiving terminal 4702 in the digital content distribution system of the present invention. This operation will be explained below by following this flowchart. The following procedure starts when the unit of monitoring communication conditions 4714 of the receiving terminal 4702 detects its connection to an information terminal 4701.
Step 0) The procedure starts (4800 in FIG. 49).
Step 1) The unit of communication control 4725 sends the information terminal 4701 a query about the conditions of communication between the information terminal 4701 and the digital content distribution apparatus 4700 (4801 in FIG. 49). In reply to this query, the unit of communication control 4712 of the information terminal 4701 returns the communication conditions detected by the unit of monitoring communication conditions 4710 of the information terminal 4701 to the receiving terminal 4702.
Step 2) The unit of communication control 4725 compares the conditions of communication between the receiving terminal 4702 and the digital content distribution apparatus 4700, detected by the unit of monitoring communication conditions 4714, with the conditions of communication between the information terminal 4701 and the digital content distribution apparatus 4700, received from the information terminal 4701. If the rate of the latter communication channel used by the information terminal 4701 is higher, the procedure proceeds to step 3). If the rate of the former communication channel used by receiving terminal 4702 is higher, the procedure proceeds to step 4) (4802 in FIG. 49).
Step 3) The unit of communication control 4725 generates the automatic download request command shown in FIG. 31 which is used to receive digital content from the digital content distribution apparatus 4700 and, if the unit of content designation information management 4718 retains content designation information, generates the designated content download request command shown in FIG. 21, and transmits these commands to the information terminal 4701. The procedure proceeds to step 5) (4803 in FIG. 49).
Step 4) The unit of communication control 4725 allows the receiving terminal 4702 to continue normal transactions. The normal transactions refer to the transactions with the distribution apparatus that are performed by the receiving terminal 2301 in the digital content distribution system of Embodiment 3. Because there is no change to the transactions procedures, the detailed descriptions thereof are not repeated here (4804 in FIG. 49).
Step 5) The procedure terminates (4805 in FIG. 49).

Through the above procedure, control can be exercised so that the receiving terminal 4702 receives digital content from the digital content distribution apparatus 4700 in either direct mode of communication with the digital content distribution apparatus 4700 or indirect mode of communication via the information terminal 4701 which provides a higher-rate channel.

FIG. 50 is a flowchart describing a procedure of operation of an information terminal 4901 in the digital content distribution system of the present invention. This operation will be explained below by following this flowchart. The followingprocedure starts when the unit of communication control 4712 of the information terminal 4701 receives data from the unit of communication control 4725 of a receiving terminal 4702.
Step 0) The procedure starts (4900 in FIG. 50).
Step 1) The unit of communication control 4712 checks to see whether the data received from the receiving terminal 4702 is a query about communication conditions. If the data is the query abut communication conditions, the procedure proceeds to step 2) ; if not, the procedure proceeds to step 3) (4901 in FIG. 50).
Step 2) The unit of communication control 4712 returns communication conditions detected by the unit of monitoring communication conditions 4710 to the receiving terminal 4702 and the procedure proceeds to step 5) (4902 in FIG. 50).
Step 3) The unit of communication control 4712 checks to see if the data received from the receiving terminal 4702 is the automatic download request command shown in FIG. 31 or designated content download request command shown in FIG. 21 to receive digital content from the digital content distribution apparatus 4700. If the data is command data, the procedure proceeds to step 4) ; if not, the procedure proceeds to step 5) (4903 in FIG. 50) .
Step 4) The information terminal transmits the automatic download request command shown in FIG. 31 or designated content download request command shown in FIG. 21 to the digital content distribution apparatus 4700 and forwards digital content and data downloaded from the digital content distribution apparatus 4700 to the receiving terminal 4702 (4904 in FIG. 50). The data downloaded from the digital content distribution apparatus 4700 is, concretely, the catalog update command shown in FIG. 11, stock instruction command in FIG. 12, and removal instruction command in FIG. 13.
Step 5) The procedure terminates (4905 in FIG. 50).

Through the above procedure, when a receiving terminal 4701 selects indirect mode of communication with the digital content distribution apparatus 4700 via an information terminal 4701, the information terminal 4701 can receive digital content from the digital content distribution apparatus 4700 on behalf of the receiving terminal 4702, using commands received from the receiving terminal 4701.

As described above, according to the digital content distribution system of the present embodiment of the invention, control can be exercised to allow the receiving terminal 4702 to select either direct mode of communication with the digital content distribution apparatus 4700 or indirect mode of communication via the information terminal 4701 which provides a higher-rate channel for data transmission and reception.

While the present invention has been described, based on the preferred embodiments thereof shown in the accompanying drawings, it will be apparent to those skilled in the art to which the invention pertains that the invention can easily be altered, modified, and varied in light of the aforementioned description. The invention is intended to embrace all such alternatives, modifications, and variations which fall within the spirit and scope of the appended claims.

## Claims

1. A digital content distribution system for implementing digital content transmission and reception on communication channels, said digital content distribution system comprising a digital content distribution apparatus and receiving terminals,
said digital content distribution apparatus comprising:
a unit of download and stock management which manages content download and stockmanagement data descriptive of digital content volumes downloaded and stocked in the receiving terminals which receive a digital content from said digital content distribution apparatus; and
a unit of determining digital content to download which determines digital content to download to said receiving terminals, using said content download and stockmanagement data, and downloads the digital content to said receiving terminals;
each of said receiving terminals comprising:
a unit of equipment identifier data management which manages equipment identifier data for identifying each of said receiving terminals; and
a unit of service provision which transmits/receives data to/from said digital content distribution apparatus and provides service to an end user,
wherein said digital content distribution apparatus, upon receiving said equipment identifier data from one of said receiving terminals, identifies said content download and stock management data for the receiving terminal having the equipment identifier, using said equipment identifier data received, and thereby can provide service to the end user at said receiving terminal.

2. The digital content distribution system for implementing digital content transmission and reception on communication channels according to claim 1, wherein said equipment identifier data for each of said receiving terminals is stored onto a portable storage medium and service can be provided to the end user after the portable storage medium is attached to each said receiving terminal used by the end user.

3. The digital content distribution system for implementing digital content transmission and reception on communication channels according to claim 1, further comprising an information terminal which is connectable to said receiving terminals and has a channel for transmitting/receiving data to/from said digital content distribution apparatus, wherein the unit of service provision of said receiving terminal detects communication channel conditions whereby digital content transmission and reception can be performed through either said receiving terminal's channel or said information terminal's channel, which performs at a higher rate, to said digital content distribution apparatus.

4. A digital content distribution system for implementing digital content transmission and reception on communication channels, said digital content distribution system including receiving terminals, each comprising:
a unit of equipment identifier data management which manages equipment identifier data for identifying each of said receiving terminals;
a unit of monitoring communication conditions for monitoring conditions of communication with a digital content distribution apparatus which distributes said digital content; and
a unit of service provision which transmits/receives data to/from said digital content distribution apparatus according to said conditions of communication and provides service to an end user,

5. A digital content distribution system for implementing digital content transmission and reception on communication channels, said digital content distribution system including a digital content distribution apparatus comprising:
a unit of download and stock management which manages content download and stock data descriptive of digital content volumes downloaded and stocked in receiving terminals which receive digital content from said digital content distribution apparatus; and
a unit of determining digital content to download which determines a digital content to download to said receiving terminals, using said content download and stockmanagement data, and downloads the digital content to said receiving terminals;

6. The digital content distribution system for implementing digital content transmission and reception on communication channels according to claim 1, wherein said content download and stock management data includes, at least, space available in a storage medium included in each of said receiving terminals and a list of digital contents stored on said storage medium.

7. The digital content distribution system for implementing digital content transmission and reception on communication channels according to claim 4, wherein said unit of service provision of said receiving terminal receives a removal instruction command to remove digital contents out of the digital contents retained on said receiving terminal and removes the digital contents, according to said removal instruction command.

8. The digital content distribution system for implementing digital content transmission and reception on communication channels according to claim 5, wherein said unit of determining a digital content to download of said digital content distribution apparatus generates a removal instruction command to remove digital contents from the storage medium included in each of said receiving terminals, based on said content download and stock data, and sends the thus generated removal instruction command to each of said receiving terminals.

9. The digital content distribution system for implementing digital content transmission and reception on communication channels according to claim 4, wherein each of said receiving terminals further comprises:
a display unit which accepts a purchase order for a digital content from the user by providing a user-interface screen that allows the user to specify content designation information that designates a digital content and displays the thus designated digital content; and
a unit of booking content to receive which registers said content designation information if said receiving terminal does not retain the digital content designated by said content designation information,
wherein said unit of service provision of said receiving terminal transmits said content designation information to said digital content distribution apparatus, according to communication conditions monitored by said unit of monitoring communication conditions, and thereby the digital content designated by said content designation information can be booked and received.

10. The digital content distribution system for implementing digital content transmission and reception on communication channels according to claim 5, wherein said unit of determining digital content to download of said digital content distribution apparatus, upon receiving content designation information that designates a digital content from one of said receiving terminals, transmits the digital content designated by said content designation information to said receiving terminal.

11. The digital content distribution system for implementing digital content transmission and reception on communication channels according to claim 1, wherein
each of said receiving terminals further comprises:
a unit of generating usage history information which, in response to user action of purchase order for at least one content, generates usage history information that the user has now purchased the at least one content; and
a unit of sending usage history information which transmits said usage history information with said equipment identifier data to said digital content distribution apparatus,
said digital content distribution apparatus in said digital content distribution system further comprises:
a unit of user information management which manages user information about the users of said receiving terminals associated with said equipment identifier data;
a unit of receiving usage history information which receives said usage history information and said equipment identifier data from each said receiving terminal; and
a billing unit which identifies user information, based on said equipment identifier data received, and bills the user identified by the thus identified user information, according to said usage history information.

12. The digital content distribution system for implementing digital content transmission and reception on communication channels according to claim 4, wherein
each of said receiving terminals further comprises:
a unit of generating usage history information which, in response to user action of purchase order for at least one content, generates usage history information that the user has now purchased the at least one content; and
a unit of sending usage history information which transmits said usage history information with said equipment identifier data to said digital content distribution apparatus.

13. The digital content distribution system for implementing digital content transmission and reception on communication channels according to claim 12, wherein
each said receiving terminal further comprises:
a unit of service enable/disable decision which checks to see that said usage history information has been transmitted to said digital content distribution apparatus within a predetermined period after the user purchased at least one content and, if transmission of said usage history information has not occurred within the predetermined period, stops the service of digital content distribution at least until sending of said usage history information occurs.

14. The digital content distribution system for implementing digital content transmission and reception on communication channels according to claim 13, wherein said unit of service enable/disable decision of said receiving terminal makes a display of a message that prompts the user to transmit said usage history information.

15. The digital content distribution system for implementing digital content transmission and reception on communication channels according to claim 5, wherein said digital content distribution apparatus in said digital content distribution system further comprises:
a unit of user information management which manages user information about the users of said receiving terminals associated with said equipment identifier data;
a unit of receiving usage history information which receives said usage history information and said equipment identifier data; and
a billing unit which identifies user information, based on said equipment identifier data received, and bills the user identified by the thus identified user information, according to said usage history information.

16. The digital content distribution system for implementing digital content transmission and reception on communication channels according to claim 15, wherein said unit of determining digital content to download of said digital content distribution apparatus, upon receiving said equipment identifier data and said usage history information from one of said receiving terminals, determines a digital content to download to the receiving terminal identified by said equipment identifier data, based on said equipment identifier data and said usage history information.

17. The digital content distribution system for implementing digital content transmission and reception on communication channels according to claim 1, wherein said unit of service provision of said receiving terminal transmits data format information about data formats in which said receiving terminal can process content data to said digital content distribution apparatus and said unit of determining digital content to download of said digital content distribution apparatus downloads a digital content in a format compliant to said data format information received from each said receiving terminal to said receiving terminal.

18. The digital content distribution system for implementing digital content transmission and reception on communication channels according to claim 4, wherein said unit of service provision of said receiving terminal transmits data format information about data formats in which said receiving terminal can process content data to said digital content distribution apparatus.

19. The digital content distribution system for implementing digital content transmission and reception on communication channels according to claim 5, wherein said unit of determining a digital content to download of said digital content distribution apparatus downloads digital content in a format compliant to said data format information received from each of said receiving terminals to said receiving terminal.

20. A digital content distribution system for implementing digital content transmission and reception on communication channels, said digital content distribution system including a digital content distribution apparatus and an information terminal which receives a digital content, said information terminal comprising:
a unit of service provision which, when a portable storage medium is mounted on said information terminal, transmits medium identifier data for identifying said storage medium to said digital content distribution apparatus of said digital content distribution system, receives the digital content downloaded from said digital content distribution apparatus, and stores the digital content onto said storage medium,
said digital content distribution apparatus comprising:
a unit of download and stock management which manages content download and stock management data descriptive of digital content volumes downloaded and stocked in said storage medium per end user; and
a unit of determining a digital content to download which determines a digital content to download to said information terminal on which said storage medium has been mounted, using said content download and stock management data, and downloads the digital content to said information terminal,
wherein said digital content distribution apparatus, upon receiving said medium identifier data from said information terminal, identifies said content download and stock management data for the medium, using said medium identifier data received, and thereby canprovide service to the enduser at said information terminal.

21. A digital content distribution system for implementing digital content transmission and reception on communication channels, said digital content distribution system including an information terminal which receives a digital content, said information terminal comprising:
a unit of service provision which, when a portable storage medium is mounted on said information terminal, transmits medium identifier data for identifying said storage medium to a digital content distribution apparatus in said digital content distribution system, receives the digital content downloaded from said digital content distribution apparatus, and stores the digital content onto said storage medium.

22. A digital content distribution system for implementing digital content transmission and reception on communication channels, said digital content distribution system including a digital content distribution apparatus comprising:
a unit of download and stock management which manages content download and stock management data descriptive of digital content volumes downloaded and stocked in storage media which should be mounted for getting service on an information terminal that receives a digital content; and
a unit of determining a digital content to download which determines a digital content to download to said information terminal on which one of said storage media has been mounted, using said content download and stock management data, and downloads the digital content to said information terminal.

23. The digital content distribution system for implementing digital content transmission and reception on communication channels according to claim 20, wherein said content download and stock data includes, at least, space available in said storage medium and a list of digital contents stored on said storage medium.

24. The digital content distribution system for implementing digital content transmission and reception on communication channels according to claim 21, wherein said unit of service provision of said information terminal receives a removal instruction command to remove digital contents out of the digital contents stored on said storage medium and removes the digital contents from said storage medium, according to said removal instruction command.

25. The digital content distribution system for implementing digital content transmission and reception on communication channels according to claim 22, wherein said unit of determining a digital content to download of said digital content distribution apparatus generates a removal instruction command to remove digital contents from said storage medium, based on said content download and stock data, and transmits the thus generated removal instruction command to the information terminal on which said storage medium has been mounted.

26. The digital content distribution system for implementing digital content transmission and reception on communication channels according to claim 20, wherein said content distribution system further includes receiving terminals on which each said storage medium should be mounted and a digital content stored on said storage medium can be rendered, each of said receiving terminals comprising:
a display unit which accepts a purchase order for a digital content from the user by providing a user-interface screen that allows the user to specify content designation information that designates the digital content, reads the thus designated digital content from said storage medium, and displays the content; and
a unit of booking a content to receive which, if said storage medium does not retain the digital content designated by said content designation information, stores said content designation information onto said storage medium,
said information terminal further comprising:
a unit of detecting content designationinformation which, when said storage medium is mounted, detects said content designation information stored on said storage medium and reads said content designation information,
wherein said unit of service provision of said information terminal transmits said content designation information to said digital content distribution apparatus and, thereby, the digital content designated by said content designation information can be booked and received.

27. The digital content distribution system for implementing digital content transmission and reception on communication channels according to claim 21, wherein said content distribution system further includes receiving terminals on which said storage medium should be mounted and digital content stored on said storage medium can be rendered, each of said receiving terminals comprising:
a display unit which accepts a purchase order for a digital content from the user by providing a user-interface screen that allows the user to specify content designation information that designates the digital content, reads the thus designated digital content from said storage medium, and displays the content; and
a unit of booking content to receive which, if said storage medium does not retain the digital content designated by said content designation information, stores said content designation information onto said storage medium.

28. The digital content distribution system for implementing digital content transmission and reception on communication channels according to claim 21, wherein said information terminal further comprises a unit of detecting content designation information which, when said storage medium is mounted, detects said content designation information stored on said storage medium and reads said content designation information, and
wherein said unit of service provision of said information terminal transmits said content designation information to said digital content distribution apparatus and, thereby, the digital content designated by said content designation information can be booked and received.

29. The digital content distribution system for implementing digital content transmission and reception on communication channels according to claim 22, wherein said unit of determining a digital content to download of said digital content distribution apparatus, upon receiving content designation information that designates digital content from said information terminal, transmits the digital content designated by said received content designation information to said information terminal.

30. The digital content distribution system for implementing digital content transmission and reception on communication channels according to claim 20, wherein said content distribution system further includes receiving terminals on which each said storage medium should be mounted and digital content stored on said storage medium can be rendered, each said receiving terminal comprising:
a unit of generating usage history information which, in response to user action of purchase order for at least one content, generates usage history information that the user has now purchased the at least one content and stores said generated usage history information onto said storage medium,
said information terminal further comprising:
a unit of detecting usage history information which, when said storagemediumis mounted, detects usage history information stored on said storage medium and reads the usage history information; and
a unit of transmitting usage history information which transmits said usage history information with said medium identifier data to said digital content distribution apparatus, said digital content distribution apparatus further comprising:
a unit of user information management which manages user information about users associated with said medium identifier data;
a unit of receiving usage history information which receives said usage history information and said medium identifier data from said information terminal; and
a billing unit which identifies user information, based on said medium identifier data received, and bills the user identified by the thus identified user information, according to said usage history information.

31. The digital content distribution system for implementing digital content transmission and reception on communication channels according to claim 27, wherein each of the receiving terminals on which each said storage medium should be mounted and the digital content stored on said storage medium can be rendered further comprises a unit of generating usage history information which, in response to user action of purchase order for at least one content, generates usage history information that the user has now purchased the at least one content and stores said generated usage history information onto said storage medium.

32. The digital content distribution system for implementing digital content transmission and reception on communication channels according to claim 31, wherein each said receiving terminal further comprises:
a unit of service enable/disable decision which checks to see that said usage history information has been transmitted to said digital content distribution apparatus within a predetermined period after the user purchased at least one content and, if transmission of said usage history information has not occurred within the predetermined period, stops the service of digital content distribution at least until sending of said usage history information occurs.

33. The digital content distribution system for implementing digital content transmission and reception on communication channels according to claim 32, wherein said unit of service enable/disable decision of said receiving terminal makes a display of a message that prompts the user to transmit said usage history information.

34. The digital content distribution system for implementing digital content transmission and reception on communication channels according to claim 32, wherein said information terminal further comprises:
a unit of detecting usage history information which, when said storage mediumis mounted, detects usage history information that at least one content has been purchased at one of said receiving terminals, stored on said storage medium, and reads the usage history information; and
a unit of sending usage history information which transmits said usage history information with said medium identifier data to said digital content distribution apparatus.

35. The digital content distribution system for implementing digital content transmission and reception on communication channels according to claim 22, wherein said digital content distribution apparatus in said digital content distribution system further comprises:
a unit of user information management which manages user information about users associated with said medium identifier data;
a unit of receiving usage history information which receives said usage history information and said medium identifier data from said information terminal; and
a billing unit which identifies user information, based on said medium identifier data received, and bills the user identified by the thus identified user information, according to said usage history information:

36. The digital content distribution system for implementing digital content transmission and reception on communication channels according to claim 35, wherein said unit of determining a digital content to download of said digital content distribution apparatus, upon receiving said medium identifier data and said usage history information from said information terminal, determines a digital content to download to the information terminal on which the storage medium identified by said medium identifier data has been mounted, based on said medium identifier data and said usage history information.

37. The digital content distribution system for implementing digital content transmission and reception on communication channels according to claim 20, wherein each of said receiving terminals stores data format information about data formats in which said receiving terminal can process content data onto said storage medium, said unit of service provision of said information terminal, when said storage medium is mounted, reads said data format information from said storage medium and transmits said data format information to said digital content distribution apparatus, and said unit of determining digital content to download of said digital content distribution apparatus downloads a digital content in a format compliant to said data format information received from said information terminal to said information terminal on which said storage medium has been mounted.

38. The digital content distribution system for implementing digital content transmission and reception on communication channels according to claim 27, wherein each of said receiving terminals stores data format information about data formats in which said receiving terminal can process content data onto said storage medium.

39. The digital content distribution system for implementing digital content transmission and reception on communication channels according to claim 21, wherein said unit of service provision of said information terminal, when said storage medium is mounted, reads said data format information from said storage medium and transmits said data format information to said digital content distribution apparatus.

40. The digital content distribution system for implementing digital content transmission and reception on communication channels according to claim 22, wherein said unit of determining a digital content to download of said digital content distribution apparatus downloads a digital content in a format compliant to said data format information received from said information terminal to said information terminal on which said storage medium has been mounted.

41. A digital content distribution method for implementing digital content transmission and reception on communication channels, said digital content distribution method comprising the following steps which are executed on a digital content distribution apparatus:
(a) a step of managing content download and stock management data descriptive of digital content volumes downloaded and stocked in receiving terminals which receive a digital content from said digital content distribution apparatus;
(b) a step of determining a digital content to download to said receiving terminals, using said content download and stock management data, and downloading the digital content to said receiving terminals;
said digital content distribution method further comprising the following steps which are executed on said receiving terminals:
(c) a step of managing equipment identifier data for identifying each of said receiving terminals; and
(d) a step of transmitting/receiving data to/from said digital content distribution apparatus and providing service to an end user.

42. A digital content distribution method for implementing digital content transmission and reception on communication channels, said digital content distribution method comprising the following steps which are executed on receiving terminals:
(a) a step of managing equipment identifier data for identifying each of said receiving terminals;
(b) a step of monitoring the conditions of communication with a digital content distribution apparatus which distributes said digital content; and
(c) a step of transmitting/receiving data to/from said digital content distribution apparatus, according to said conditions of communication, and providing service to an end user.

43. A digital content distribution method for implementing digital content transmission and reception on communication channels, said digital content distribution method comprising the following steps which are executed on a digital content distribution apparatus:
(a) a step of managing content download and stock data descriptive of digital content volumes downloaded and stocked in receiving terminals which receive a digital content from said digital content distribution apparatus; and
(b) a step of determining digital content to download to said receiving terminals, using said content download and stock management data, and downloading the digital content to said receiving terminals.

44. The digital content distribution method for implementing digital content transmission and reception on communication channels according to claim 42, wherein said digital content distribution method further comprises the following steps which are executed on the receiving terminals:
(a) a step of, in response to user action of purchase order for at least one content, generating usage history information that the user has now purchased the at least one content; and
(b) a step of transmitting said usage history information with said equipment identifier data to said digital content distribution apparatus.

45. The digital content distribution method for implementing digital content transmission and reception on communication channels according to claim 43, wherein said digital content distribution method further comprises the following steps which are executed on the digital content distribution apparatus:
(a) a step of managing user information about the users of said receiving terminals associated with said equipment identifier data;
(b) a step of receiving said usage history information and said equipment identifier data from each of said receiving terminals; and
(c) a step of identifying user information, based on said equipment identifier data received, and billing the user identified by the thus identified user information, according to said usage history information.

46. A computer-readable storage medium containing a digital content distribution program for implementing digital content transmission and reception on communication channels, said digital content distribution program comprising the following steps which are executed on a digital content distribution apparatus:
(a) a step of managing content download and stock management data descriptive of digital content volumes downloaded and stocked in receiving terminals which receive a digital content from said digital content distribution apparatus;
(b) a step of determining digital content to download to said receiving terminals, using said content download and stock management data, and downloading the digital content to said receiving terminals;
said digital content distribution program further comprising the following steps which are executed on said receiving terminals:
(c) a step of managing equipment identifier data for identifying each of said receiving terminals; and
(d) a step of transmitting/receiving data to/from said digital content distribution apparatus and providing service to an end user.

47. A computer-readable storage medium containing a digital content distribution program for implementing digital content transmission and reception on communication channels, said digital content distribution program comprising the following steps which are executed on receiving terminals:
(a) a step of managing equipment identifier data for identifying each of said receiving terminals;
(b) a step of monitoring the conditions of communication with a digital content distribution apparatus which distributes said digital content; and
(c) a step of transmitting/receiving data to/from said digital content distribution apparatus, according to said conditions of communication, and providing service to an end user.

48. A computer-readable storage medium containing a digital content distribution program for implementing digital content transmission and reception on communication channels, said digital content distribution program comprising the following steps which are executed on a digital content distribution apparatus:
(a) a step of managing content download and stock data descriptive of digital content volumes downloaded and stocked in receiving terminals which receive a digital content from said digital content distribution apparatus; and
(b) a step of determining digital content to download to said receiving terminals, using said content download and stock management data, and downloading the digital content to said receiving terminals;

49. The computer-readable storage medium containing a digital content distribution program for implementing digital content transmission and reception on communication channels according to claim 47, wherein said digital content distribution program further comprises the following steps which are executed on the receiving terminals:
(a) a step of, in response to user action of purchase order for at least one content, generating usage history information that the user has now purchased the at least one content; and
(b) a step of transmitting said usage history information with said equipment identifier data to said digital content distribution apparatus.

50. The computer-readable storage medium containing a digital content distribution program for implementing digital content transmission and reception on communication channels according to claim 48, wherein said digital content distribution program further comprises the following steps which are executed on the digital content distribution apparatus:
(a) a step of managing user information about the users of said receiving terminals associated with said equipment identifier data;
(b) a step of receiving said usage history information and said equipment identifier data from each of said receiving terminals; and
(c) a step of identifying user information, based on said equipment identifier data received, and billing the user identified by the thus identified user information, according to said usage history information.

51. A computer-executable digital content distribution program for implementing digital content transmission and reception on communication channels, said digital content distribution program comprising the following steps which are executed on a digital content distribution apparatus:
(a) a step of managing content download and stock management data descriptive of digital content volumes downloaded and stocked in receiving terminals which receive a digital content from said digital content distribution apparatus;
(b) a step of determining the digital content to download to said receiving terminals, using said content download and stock management data, and downloading the digital content to said receiving terminals;
said digital content distribution program further comprising the following steps which are executed on said receiving terminals:
(c) a step of managing equipment identifier data for identifying each of said receiving terminals; and
(d) a step of transmitting/receiving data to/from said digital content distribution apparatus and providing service to an end user.

52. A computer-executable digital content distribution program for implementing digital content transmission and reception on communication channels, said digital content distribution program comprising the following steps which are executed on receiving terminals:
(a) a step of managing equipment identifier data for identifying each of said receiving terminals;
(b) a step of monitoring the conditions of communication with a digital content distribution apparatus which distributes said digital content; and
(c) a step of transmitting/receiving data to/from said digital content distribution apparatus, according to said conditions of communication, and providing service to an end user.

53. A computer-executable digital content distribution program for implementing digital content transmission and reception on communication channels, said digital content distribution program comprising the following steps which are executed on a digital content distribution apparatus:
(a) a step of managing content download and stock data descriptive of digital content volumes downloaded and stocked in receiving terminals which receive a digital content from said digital content distribution apparatus; and
(b) a step of determining digital content to download to said receiving terminals, using said content download and stock management data, and downloading the digital content to said receiving terminals;

54. The computer-executable digital content distribution program for implementing digital content transmission and reception on communication channels according to claim 52, wherein said digital content distribution program further comprises the following steps which are executed on the receiving terminals:
(a) a step of, in response to user action of purchase order for at least one content, generating usage history information that the user has now purchased the at least one content; and
(b) a step of transmitting said usage history information with said equipment identifier data to said digital content distribution apparatus.

55. The computer-executable digital content distribution program for implementing digital content transmission and reception on communication channels according to claim 53, wherein said digital content distribution program further comprises the following steps which are executed on the digital content distribution apparatus:
(a) a step of managing user information about the users of said receiving terminals associated with said equipment identifier data;
(b) a step of receiving said usage history information and said equipment identifier data from each said receiving terminal; and
(c) a step of identifying user information, based on said equipment identifier data received, and billing the user identified by the thus identified user information, according to said usage history information.

56. A content distribution apparatus comprising:
a unit of download and stock management which manages content download and stockmanagement data descriptive of digital content volumes downloaded and stocked in the content receiving apparatus which receives a digital content from said digital content distribution apparatus; and
a unit of determining digital content to download which determines digital content to download to said content receiving apparatus, using said content download and stockmanagement data, and downloads the digital content to said content receiving apparatus;
wherein said digital content distribution apparatus, upon receiving equipment identifier data from one of said content receiving apparatus, identifies said content download and stock management data for the content receiving apparatus having the equipment identifier, using said equipment identifier data received, and thereby can provide service to the end user at said content receiving apparatus.

57. A digital content receiving apparatus comprising:
a unit of equipment identifier data management which manages equipment identifier data for identifying said content receiving apparatus; and
a unit of monitoring communication conditions for monitoring conditions of communication with a digital content distribution apparatus which distributes said digital content; and
a unit of service provision which transmits/receives data to/from said digital content distribution apparatus according to said conditions of communication and provides service to an end user.
wherein said content receiving apparatus, when demanding a content, sends the equipment identifier data of said content receiving apparatus, to said digital content distribution apparatus.
